(19) Europäisches Patentamt
European Patent Office
Office européen des brevets

(11) **EP 1 980 904 B1**

(12) **EUROPEAN PATENT SPECIFICATION**

(45) Date of publication and mention
of the grant of the patent:
**15.02.2012 Bulletin 2012/07**

(51) Int Cl.:
***G03B 5/00*** *(2006.01)*     ***G03B 17/00*** *(2006.01)*
***H04N 5/232*** *(2006.01)*     ***G02B 27/64*** *(2006.01)*

(21) Application number: **08250881.3**

(22) Date of filing: **14.03.2008**

(54) **Image blur correcting device, image blur correcting method, and recording medium**

Vorrichtung und Verfahren zur Korrektur von Bildunschärfe sowie Aufzeichnungsmedium

Dispositif de correction du flou d'une image, procédé de correction du flou d'une image et support d'enregistrement

(84) Designated Contracting States:
**DE FR GB**

(30) Priority: **15.03.2007 JP 2007067673**

(43) Date of publication of application:
**15.10.2008 Bulletin 2008/42**

(73) Proprietor: **Ricoh Company, Ltd.**
**Tokyo 143-8555 (JP)**

(72) Inventor: **Shiraishi, Kenji,**
**c/o Ricoh Company Ltd.**
**Tokyo 143-8555 (JP)**

(74) Representative: **Leeming, John Gerard**
**J.A. Kemp & Co.**
**14 South Square**
**Gray's Inn**
**London WC1R 5JJ (GB)**

(56) References cited:
**EP-A2- 1 708 019     US-A1- 2005 001 906**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a device and method to perform an image blur correction in an imaging apparatus such as a still camera, a video camera, and the like. More particularly, the present invention relates to improvements of a device and a method to perform an image blur correction in which a correction efficiency can be improved due to a correcting operation adapted for a state of a camera shake and which is preferably used in a digital camera, or the like. The present invention also relates to a computer-readable recording medium in which a program to perform an image blur correction is stored.

An unintended needless movement such as a shake of an imaging apparatus such as a still camera, a video camera and the like causes an image blur in an image formed by the imaging apparatus. Generally, a device to correct the above-mentioned image blur is configured to detect a movement of the imaging apparatus such as a shake of the imaging apparatus by the use of a camera shake detector such as a gyro sensor, and to drive a correcting system to move an imaging plane in a direction so as to reduce the image blur based on the detected result of the camera shake detector. The correcting system is formed of at least one of an optical system formed of at least a part of a photographing lens unit of the imaging apparatus and an image pickup device such as a CCD image sensor.

Since the image blur correction is performed in photographing a subject image, it is possible for the image blur correction to be affected by a noise generated by driving the correcting system, a noise generated by the image pickup device, a noise generated by operations of a signal processing LSI (large-scale integration) and a CPU (central processing unit), or the like. Accordingly, if the correcting system is driven without considering the above-mentioned noises, the correcting system is driven in a direction which is not necessary to reduce the image blur, so that this inappropriate image blur correction causes an image blur.

To solve the above problems, Japanese Patent Application Publication Number 2003-189164 suggests an imaging apparatus having an image blur correcting function in which a mechanical switch detects whether the imaging apparatus is fixed on a tripod stand, that is to say, whether the image blur correction is not necessary to stop the image blur correction. That is to say, when the imaging apparatus is fixed on the tripod stand, since the photographing operation is not performed in a handheld state, there is almost no possibility of image blur being generated. In addition, if the image blur correction is performed in a case where the imaging apparatus is fixed, there is a high risk of image blur being generated by the inappropriate image blur correction due to these noises. Therefore, in Japanese Patent Application Publication Number 2003-189164, the mechanical switch to detect whether or not the imaging apparatus is fixed on the tripod stand is provided, and then if it is detected that the imaging apparatus is fixed on the tripod, the image blur correction is stopped.

Japanese Patent Application Publication Number 2001-201778 proposes an image blur correcting function, in which an image blur correction is stopped in a case where a detected value of a camera shake detector such as an angular velocity sensor is less than a predetermined value. That is to say, if the detected value of the camera shake detector is considerably small, the image blur almost does not occur and a correcting system is operated mainly in response to the noises so that the image blur due to the correcting operation can easily occur.

On the other hand, in Japanese Patent Application Publication Number 2001-201778, if an integral value of the detected results of the camera shake detector is less than a predetermined value, the following image blur correction is not performed.

In addition, Japanese Patent Number 3473105 proposes a device to control a range-reaponsive property of the image blur correcting device by changing the range-responsive property based on an output state of the camera shake detector such as an angular velocity sensor. That is to say, if correcting operations for the handshake are performed when panning or tilting, smoothly panning or tilting operations are disturbed by the correcting operations. In Japanese Patent Number 3473105, if the output of the angular velocity sensor continuously exceeds a threshold value in continuous samplings for a predetermined time or more, it is determined that a panning or tilting operation is performed. If the output does not continuously exceed the threshold value in the continuous samplings for a time less than the predetermined time, it is determined that there is a handshake. Furthermore, a highpass filter property of the output of the camera shake detector is changed based on the determined result so that a range-control of the responsive property of the correcting operation is performed.

However, in the conventionally-proposed arts as mentioned above, for example, in a case where a grip-assisting device or a fill-light illuminating device using the tripod stand is used, if handheld photographing is required while the tripod stand is attached to the imaging apparatus, the image blur correction can not be performed because it is determined that the imaging apparatus is fixed on the tripod stand and that the image blur correction is not necessary. In addition, the noises are detected and considered as significant data until the predetermined time elapses. This causes an inappropriate image blur correction so that the appropriate and high-accuracy image blur correction is not always performed.

US 2005/0001906 discloses an apparatus for detecting a deviation of a camera as a result of shaking. Two pairs of acceleration sensors are used and tilt angles calculated from outputs of the acceleration sensors.

EP 1 708 019 A2 discloses an image below a correction apparatus that changes image blur correction mode when it determines that a camera is performing pan/tilt operation.

An aim of the present invention is to provide a device to perform an image blur correction, a method to perform an image blur correction, and a computer readable recording medium in which a program to perform an image blur correction is stored, in the image blur correction, and an image blur generated due to a needles image blur correction based on an inappropriate detection output of a camera shake is controlled. In the image blur correction, an inappropriate inoperative occurring when it is inappropriately determined that the image blur correction is not required is effectively prevented, so that a sufficiently appropriate image blur correction can be performed. An aim of the present invention is, particularly, to provide a device perform a further appropriate image blur correction based on a state where a camera shake is detected.

According to the present invention, there are provided an image blur correction device and method as defined in the appended claims.

The present invention will be described further below with reference to exemplary embodiments and the accompanying Figures, in which:

FIG.1 is a front view schematically illustrating an outer appearance of a digital camera having an image blur correcting device, according to an embodiment of the present invention.

FIG.2 is a back view schematically illustrating an outer appearance of a digital camera having an image blur correcting device according to an embodiment of the present invention.

FIG.3 is a side view schematically illustrating an outer appearance of a digital camera having an image blur correcting device according to an embodiment of the present invention.

FIG.4 is a block diagram schematically illustrating a system configuration of the digital camera shown in FIG.1.

FIG.6 is a timing chart schematically illustrating an operational timing when photographing a still image according to the digital camera shown in FIG.1.

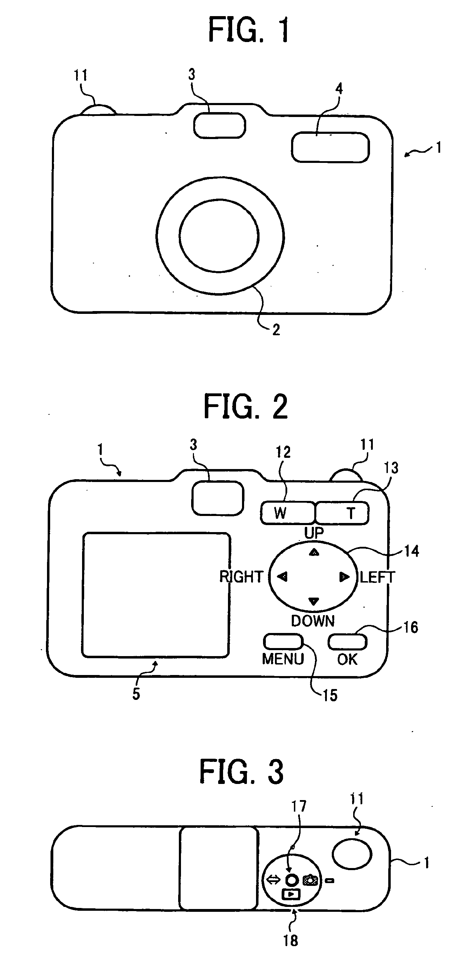

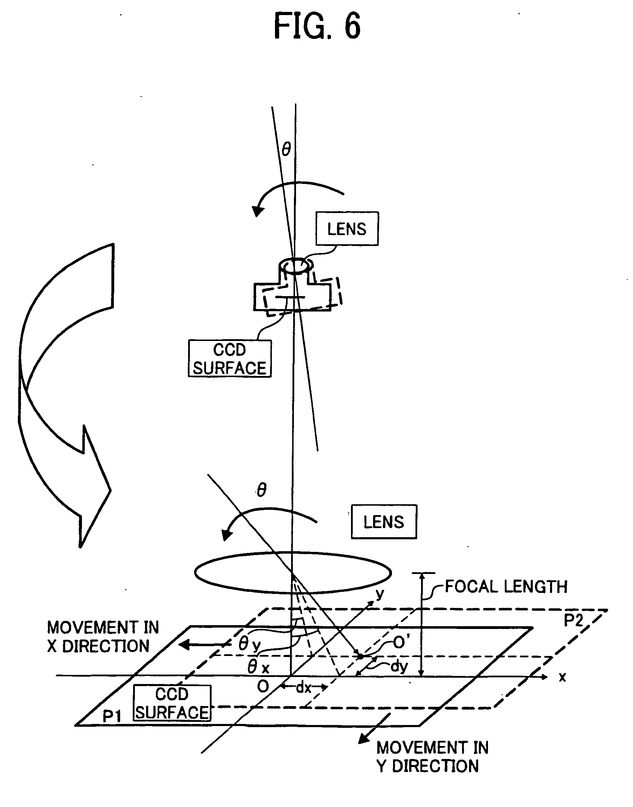

FIG.6 is a view schematically illustrating a principle of an image blur correction according to the digital camera shown in FIG.1.

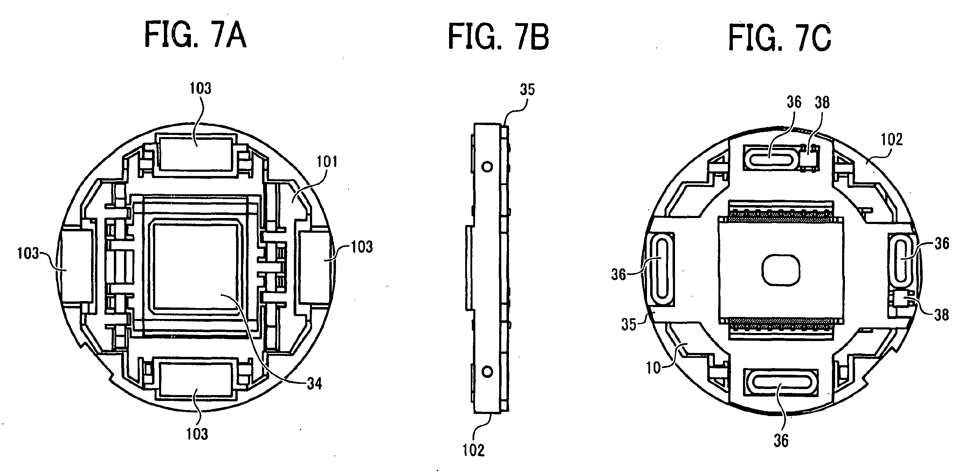

FIG.7A is a front view schematically illustrating a CCD movement mechanism for an image blur correction according to the digital camera shown in FIG.1.

FIG.7B is a side view schematically illustrating a CCD movement mechanism for an image blur correction according to the digital camera shown in FIG.1.

FIG.7C is a back view schematically illustrating a CCD movement mechanism for an image blur correction according to the digital camera shown in FIG.1.

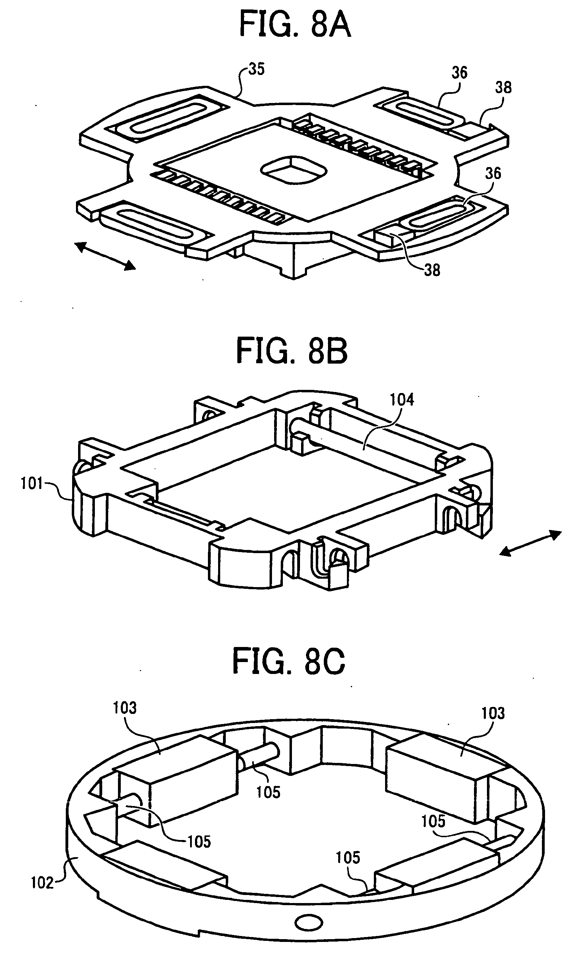

FIG.8A is an exploded perspective view schematically illustrating a CCD movement mechanism for an image blur correction according to the digital camera shown in FIG.1.

FIG.8B is an exploded perspective view schematically illustrating a CCD movement mechanism for an image blur correction according to the digital camera shown in FIG. 1.

FIG.8C is an exploded perspective view schematically illustrating a CCD movement mechanism for an image blur correction according to the digital camera shown in FIG. 1.

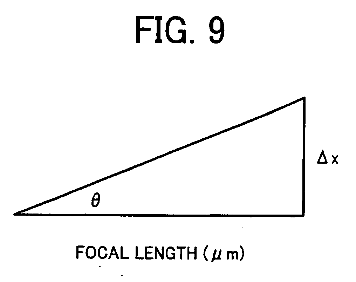

FIG.9 is a view illustrating a relationship between a focal length and a movement amount for an image blur correction according to the digital camera shown in FIG.1.

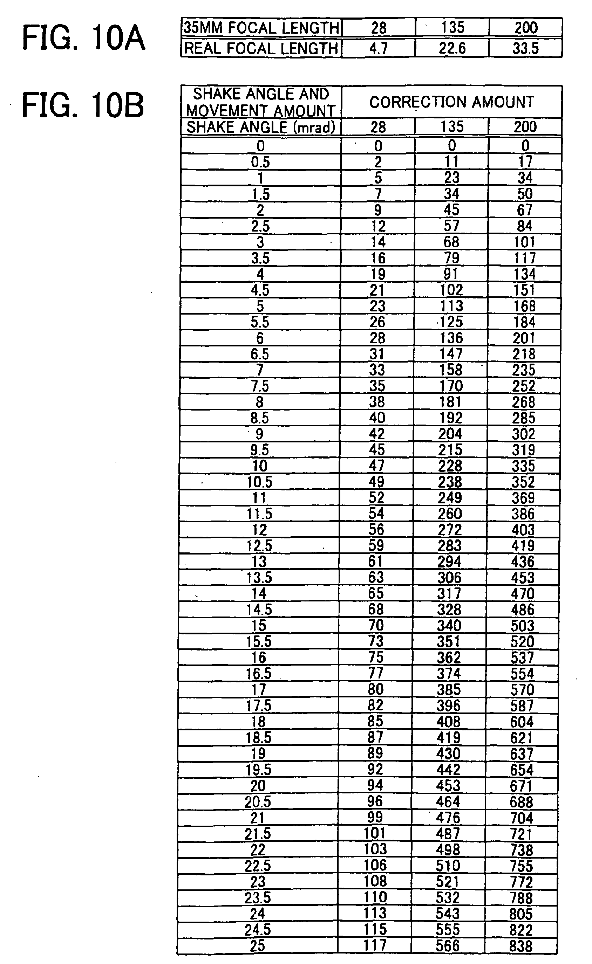

FIG.10A is a conversion table to convert focal lengths for an image blur correction according to the digital camera shown in FIG.1.

FIG. 10B is a conversion table to convert between a shake angle and a correction amount.

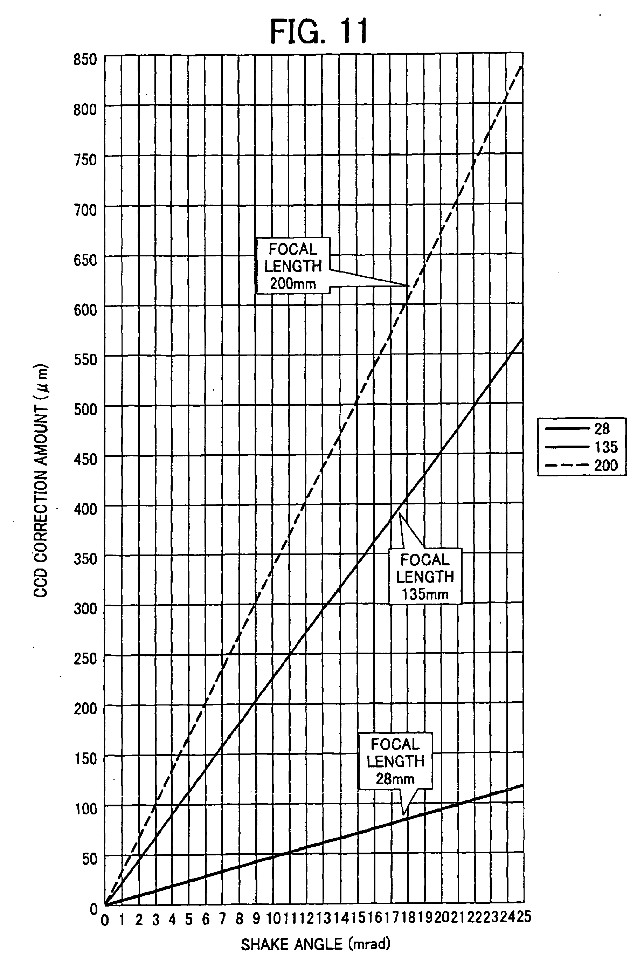

FIG.11 is a graph schematically illustrating a relationship between a shake angle and a correction amount in various focal lengths for an image blur correction according to the digital camera shown in FIG.1.

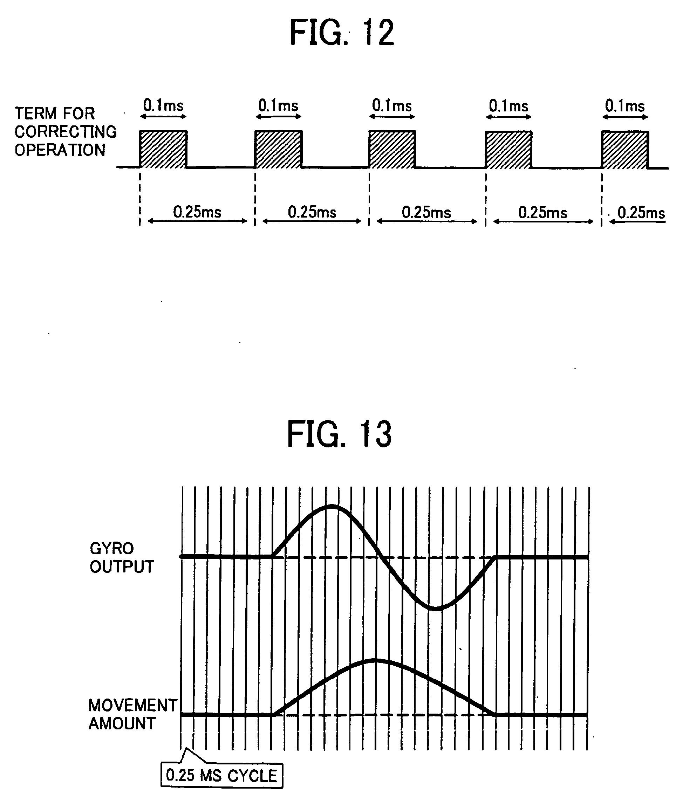

FIG.12 is a schematic view illustrating a performing cycle of an image blur correction according to the digital camera shown in FTG.1.

FIG.13 is a graph schematically illustrating curves of an output of a gyro sensor and a correction amount.

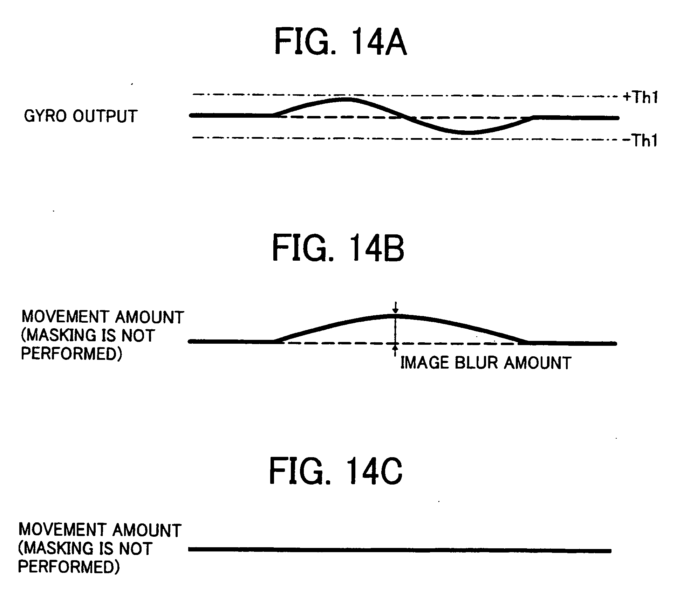

FIG.14A is a graph schematically illustrating a curve of an output of a gyro sensor for a masking operation to mask insensitive ranges of the output in an image blur correction of a digital camera according to the present invention.

F1G.14B is a graph schematically illustrating a curve of a movement amount in which a masking operation is not performed.

FIG.14C is a graph schematically illustrating a curve of a movement amount in which a masking operation is performed.

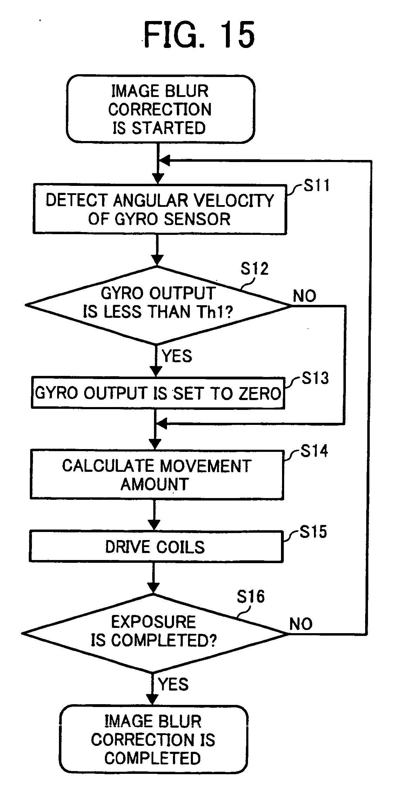

FIG.15 is a flowchart illustrating an image blur correction according to an example.

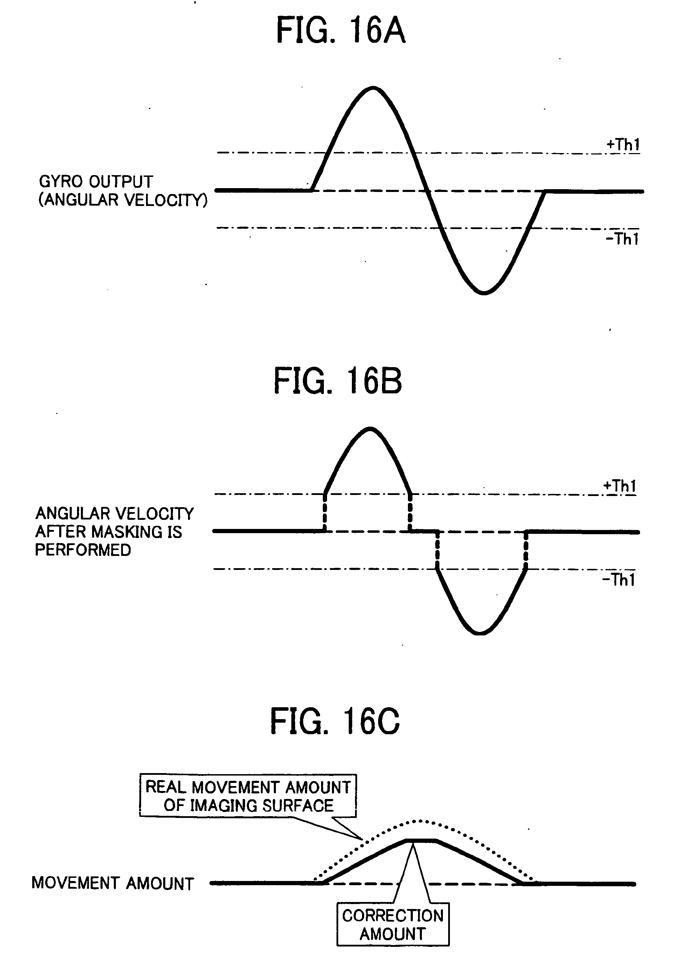

FIG.16A is a graph illustrating a curve of an output of a gyro sensor before a masking operation is performed in an image blur correction shown in FIG. 15 for a period.

FIG.16B is a graph illustrating a curve of an output of a gyro sensor after a masking operation is performed in an image blur correction shown in FIG.15 for a period.

FIG.16C is a graph illustrating an error in a curve of a correction amount in an image blur correction shown in FIG. 15 for a period.

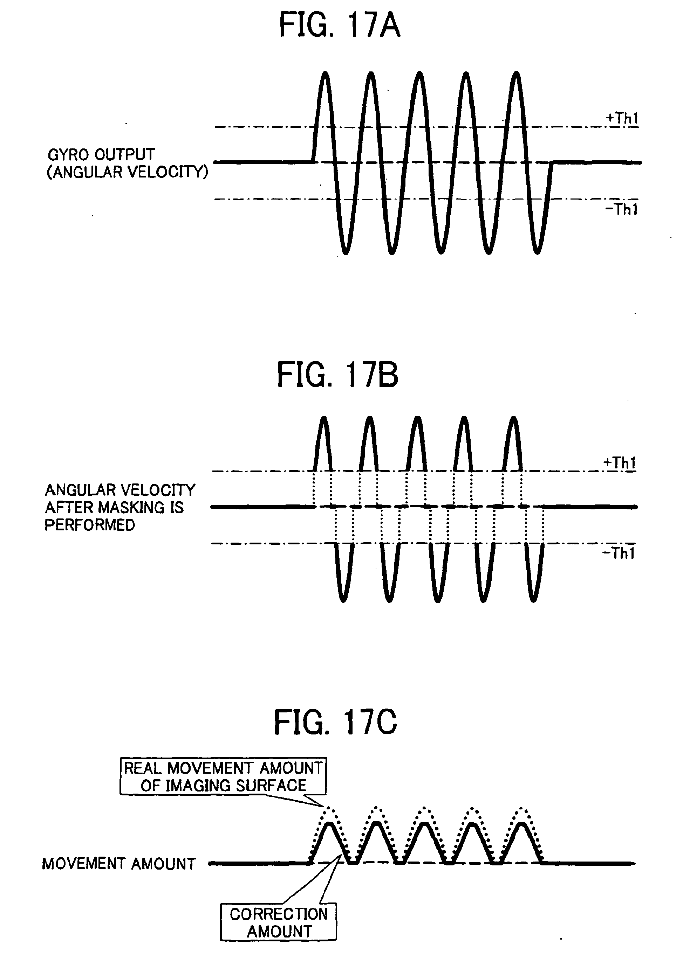

FIG.17A is a graph illustrating a curve of an output of a gyro sensor before a masking operation is performed in an image blur correction shown in FIG. 15 for plural periods.

FIG.17B is a graph illustrating a curve of an output of a gyro sensor after a masking operation is performed in an image blur correction shown in FIG.15 for plural periods.

FIG.17C is a graph illustrating an error in a curve of a correction amount in an image blur correction shown in FIG. 15 for plural periods.

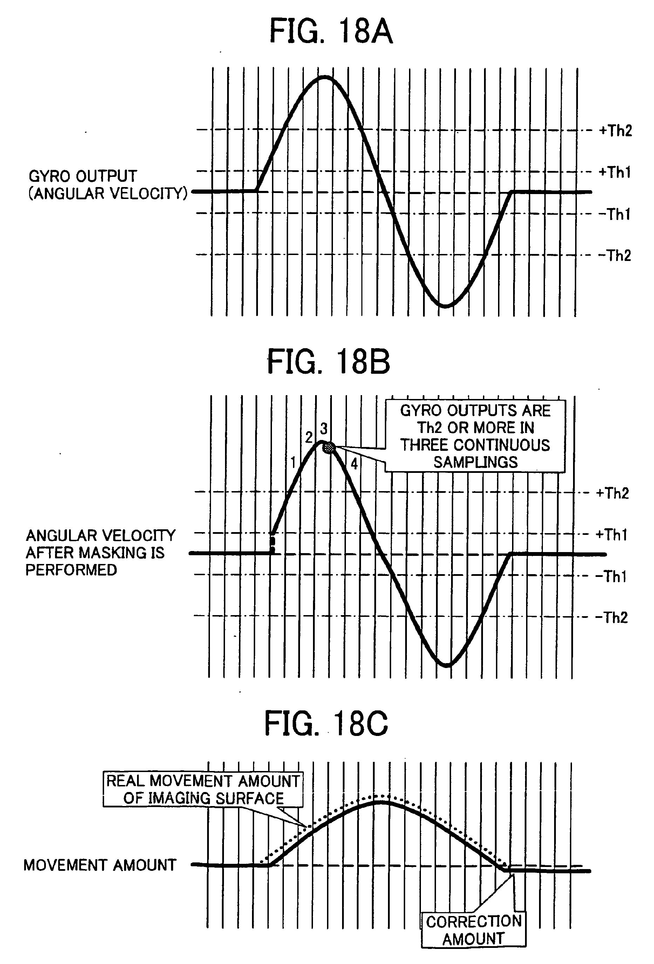

FIG.18A is a graph illustrating a curve of an output of a gyro sensor before a masking operation is performed in an improved image blur correction shown in FIG.15 for a period.

FIG.18B is a graph illustrating a curve of an output of a gyro sensor after a masking operation is performed in an improved image blur correction shown in FIG.15 for a period.

FIG.18C is a graph illustrating an error in a curve of a correction amount in an improved image blur correction shown in FIG.15 for a period.

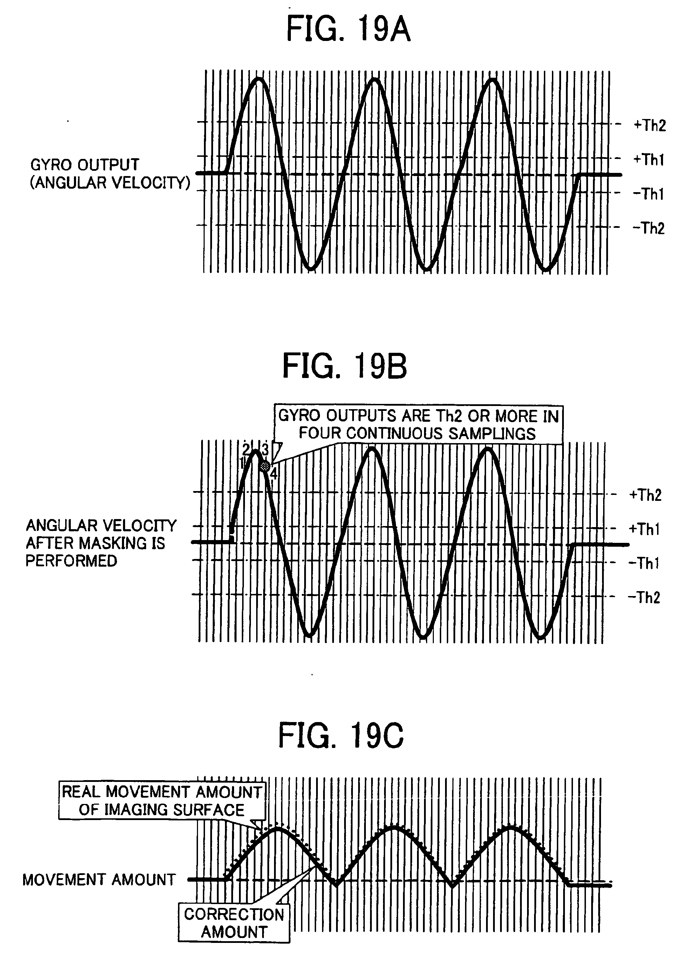

FIG.19A is a graph illustrating a curve of an output of a gyro sensor before a masking operation is performed in an improved image blur correction shown in FIG.15 for plural periods.

FIG.19B is a graph illustrating a curve of an output of a gyro sensor after a masking operation is performed in an improved image blur correction shown in FIG. 15 for plural periods.

FIG.19C is a graph illustrating an error in a curve of a correction amount in an improved image blur correction shown in FIG.15 for plural periods.

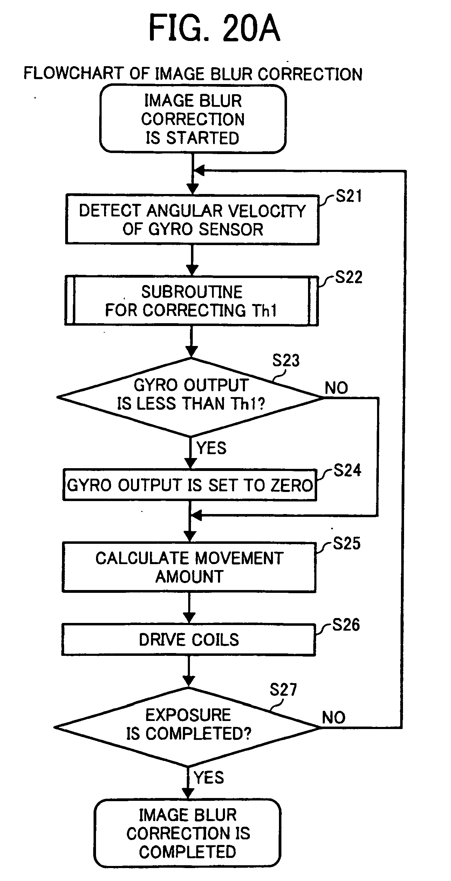

FIG.20A is a flowchart illustrating a main routine of an image blur correction according to a first embodiment of the present invention.

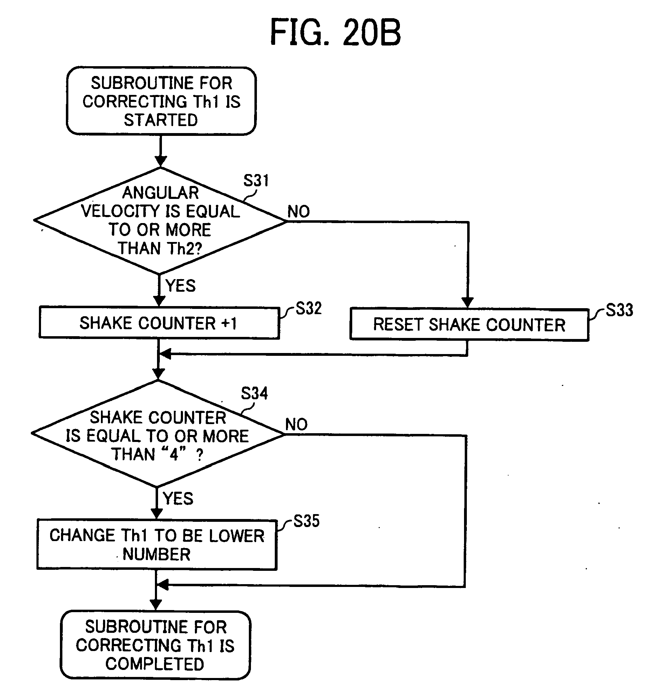

FIG.20B is a flowchart illustrating a sub routine to change a threshold value Th1 in an image blur correction according to the first embodiment of the present invention.

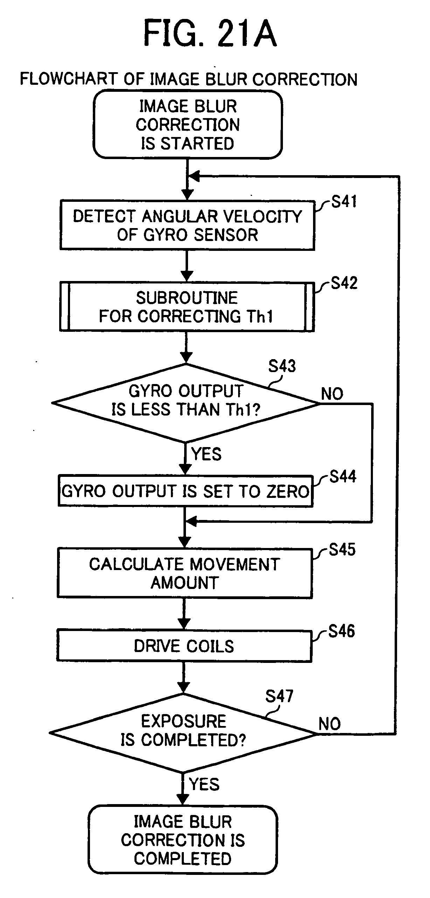

FIG.21A is a flowchart illustrating a main routine of an image blur correction according to a second embodiment of the present invention.

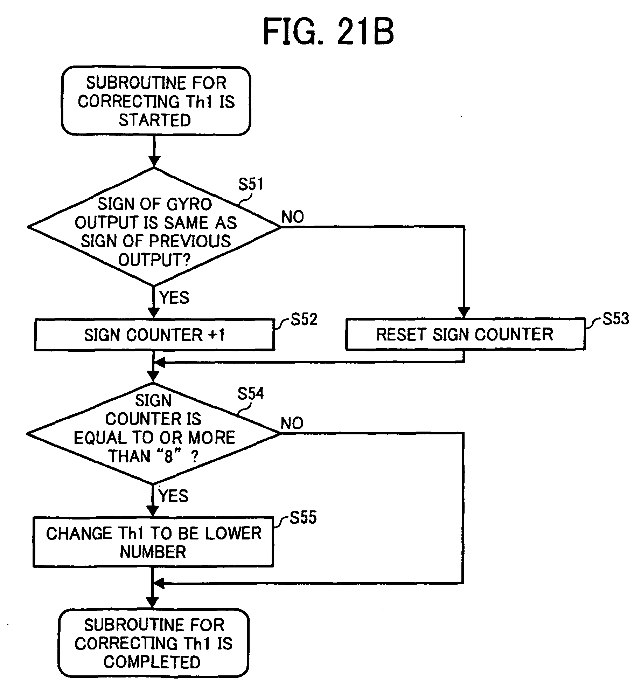

FIG.21B is a flowchart illustrating a sub routine to change a threshold value Th1 in an image blur correction according to the second embodiment of the present invention.

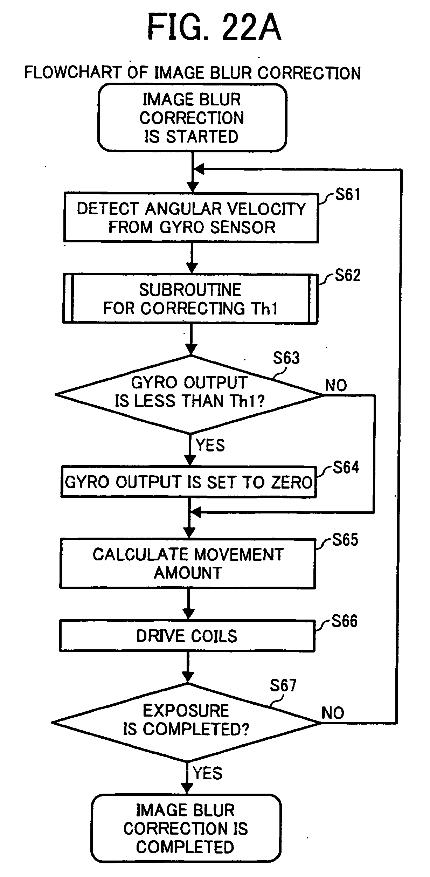

FIG.22A is a flowchart illustrating a main routine of an image blur, correction according to a third embodiment of the present invention.

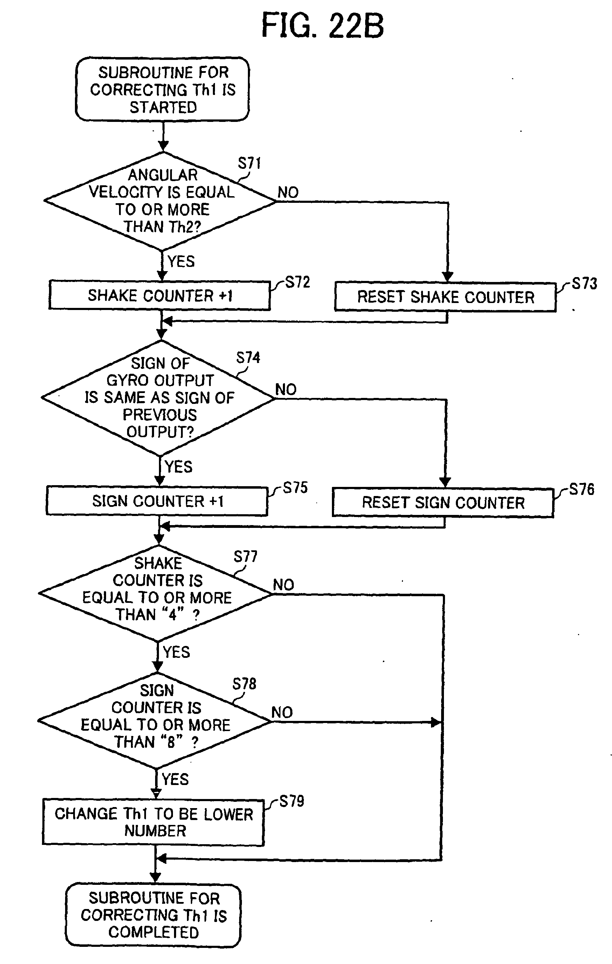

FIG.22B is a flowchart illustrating a sub routine to change a threshold value Th1 in an image blur correction according to the third embodiment of the present invention.

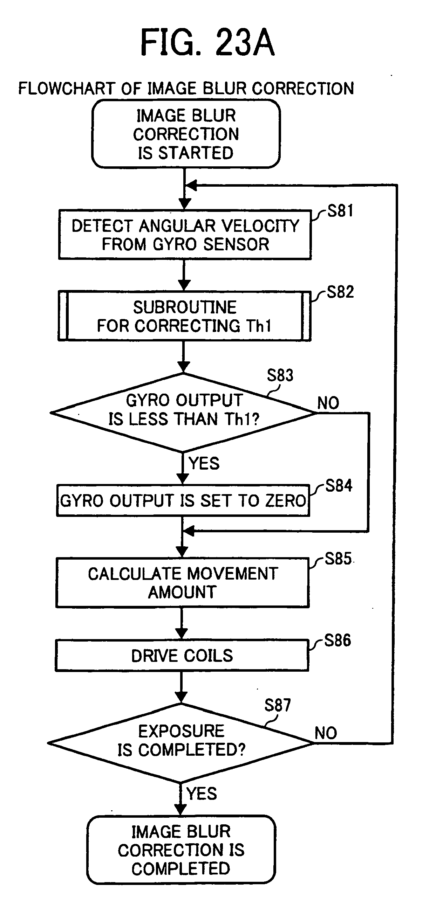

FIG.23A is a flowchart illustrating a main routine of an image blur correction according to a fourth embodiment of the present invention.

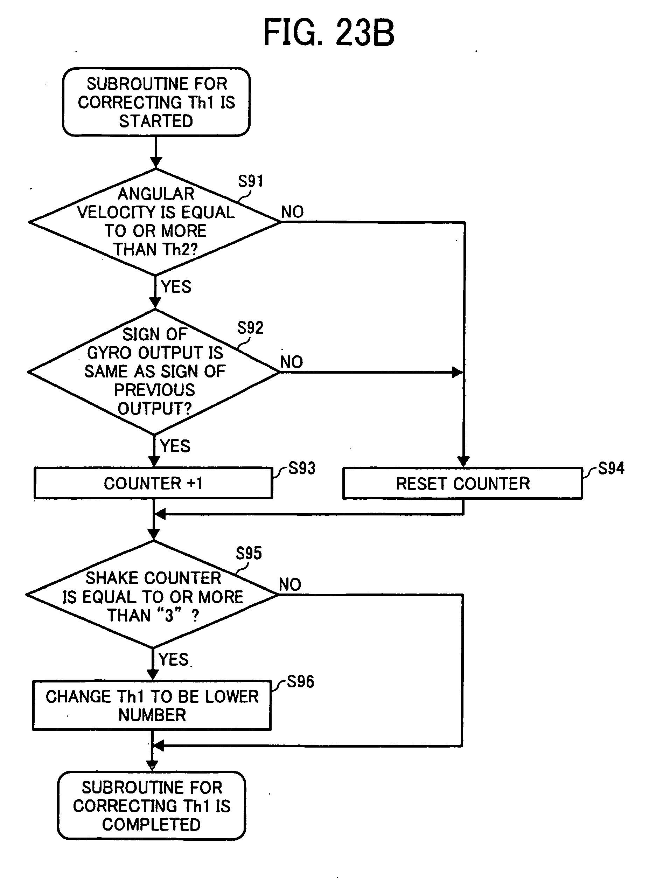

FIG.23B is a flowchart illustrating a sub routine to change a threshold value Th1 in an image blur correction according to the fourth embodiment of the present invention.

Preferred embodiments of a device for correcting an image blur according to the present invention will be explained in detail with reference to the accompanying drawings below. The image blur correcting device may be installed in an imaging apparatus such as a digital camera. The image blur correcting device includes a detector, for example, an angular velocity sensor such as a gyro sensor 39 configured to detect a shake amount of the digital camera, a moving unit configured to move an imaging area based on the shake amount detected by the gyro sensor 39, a first determining unit configured to determine whether or not the shake amount detected by the detector is less than a first threshold value Th1, and a correction controller configured to control the moving unit not to move the imaging area when it is determined that the shake amount detected by the gyro sensor 39 is less than the first threshold value Th1 by the first determining unit. The shake amount generally corresponds to a movement amount of a shake of the digital camera. The moving, unit may include, for example, a charge coupled device (CCD) stage 35 on which a solid state image pickup device such as a CCD image sensor 34 is mounted, coils 36, a coil driver 37, Hall elements 38, and the like. The first determining unit is, for example, a signal processing IC 60. The signal processing IC 60 may serve as the correction controller. Tha imaging area may be an imaging plane, or an imaging surface of the CCD image sensor 34.

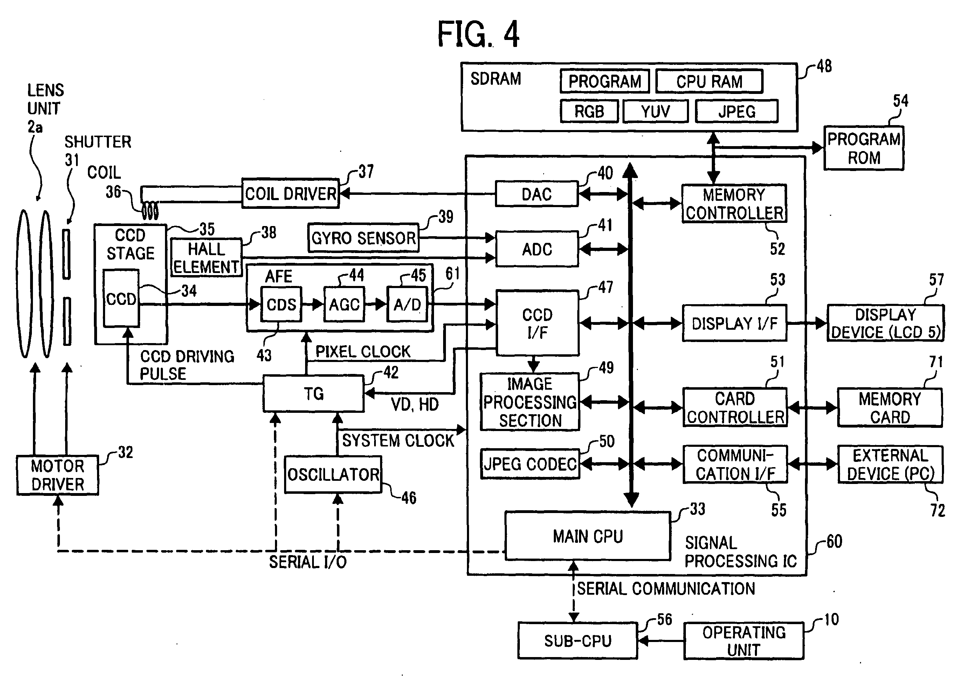

FIGs.1 to 4 show a structure of the digital camera as an imaging apparatus having the image blur correcting device according to an embodiment of the present invention. FIGs.1 to 3 schematically show an outer appearance of the digital camera and FIG.4 shows a system structure of the digital camera shown in FIGs.1 to 3. FIG.1 is a front view of the appearance of the digital camera, FIG.2 is a back view of the digital camera, and FIG.3 is a top view of the digital camera.

As shown in FIGs.1 to 3, the digital camera has a camera body 1, a photographing lens unit 2, an optical finder 3, a stroboscopic light emitting section 4, a liquid crystal display (LCD) 5, a release button 11, a wide angle zoom button 12, a telephoto zoom button 13, a direction button 14, a menu button 15, an OK button 16, a power button 17 and a photographing/reproducing switching dial 18.

As shown in FIG.4, the digital camera has a lens unit 2a, an operating unit 10, a mechanical shutter 31, a motor driver 32, a timing signal generator (TG) 42, an oscillator 46, a program read only memory (ROM) 54, a sub CPU 56, a display device 57, an analog front end (AFE) 61, an SD RAM (synchronous dynamic random access memory) 48, as well as the gyro sensor 39, the CCD image sensor 34, the CCD stage 35, the coils 36, the coil driver 37, the Hall elements 38 and the signal processing IC 60. The AFE 61 includes a correlated double sampling (CDS) circuit 43, an auto gain controller (AGC) 44, and an A/D converter 45. The signal processing IC 60 includes a digital/analogue (D/A) converter (DAC) 40, an analogue/digital converter (ADC) 41, a CCD interface (CCD-I/F) 47, an image processor 49, a JPEG codec 50, a card controller 51, a memory controller 52, a display interface (IIF) 53, a communication interface (I/F) 55, and a main CPU (central processing unit) 33.

The main CPU 33, the DAC 40, the AD 41, the CCD-I/F 47, the image processor 49, the JPEG codec 50, the card controller 51, the memory controller 52, the display I/F 53, and the communication I/F 55 are mounted on the signal processing IC (integrated circuit) 60. The CDS circuit 43, the AGC circuit 44, the A/D converter 45 are mounted on the AFE 61. The digital camera having the above-mentioned configurations may be provided with a memory card 71 or connected to an external device 72, as needed.

In addition, the operation unit 10 includes the release button 11, the wide angle zoom button 12, the telephoto zoom button 13, the direction button 14, the menu button 15, the OK button 16, the power button 16 and the photographing/reproducing switching dial 18. The lens unit 2a is included in the photographing lens unit 2 shown in FIG.1. The display device 57 includes the LCD 5 shown in FIG.1 and external devices to be connected, such as a TV (television) monitor.

The camera body 1 of the digital camera is, as shown in FrGs.1 to 3, provided with the photographing lens unit 2 which is configured in a retracting system, the optical finder 3 which is configured to optically confirm a visual field, the stroboscopic light emitting section 4 which is configured to illuminate a subject to be photographed, and the LCD 5 which is configured to display an image display of photographed images or an information display of other information. The camera body 1 is also provided with the release button 11 to perform a photographing operation, the wide angle zoom button 12 to zoom in for a wide-angle photographing, the telephoto zoom button 13 to zoom out for a telephoto photographing, the direction button 14 which is configured to input direction information in each of up, down, right and left directions, the menu button 15 which is configured to turn on/off of the menu display, the OK button 16 which is configured to select a selective mode or the like, the power button 16 configured to turn on/off the power and the photographing/reproducing switching dial 18 configured to switch between a photographing mode and a reproducing mode.

Next, each part in the system of the digital camera shown in FIG.4 will be explained. The lens unit 2a such as a zoom lens, a focus lens, and the like included in the photographing lens unit 2 and the mechanical shutter 31 are driven by the motor driver 32. The motor driver 32 is controlled by the main CPU constructed by use of a micro computer or the like included in the signal processing IC 60.

An image blur correcting system includes the CCD stage 35 on which the CCD image sensor 34 is mounted, the coils 36, the coil driver 37, the Hall element 38, and the gyro sensor 39. The CCD stage 35 is movably supported in upward, downward, right and left directions. On the CCD stage 35, the CCD image sensor 34 is fixed and the coils 36 are integrally provided, and the CCD stage 35 is fixed on the camera body at a fixation side. On the fixation side of the CCD stage 35, magnets are provided corresponding to the fixed coils 36 (see shown in FIGs.7 and 8). When a current is applied from the DAC 40 of the signal processing 1C 60 via the coil driver 37 to the coils 36 of the CCD stage 35, a magnetic field generates to move the CCD stage 35 by magnetic reactive attraction forces between the coils 36 and the magnets on the fixation side. Each of the Hall elements 38 for detecting a position is provided at a vicinity of each of the coils 36 on the CCD stage 35, so that the Hall elements 38 are disposed to face the magnets together with the coils 36, respectively. Accordingly, a change of the magnetic field due to the movement of the CCD stage 35 causes a change of input of the Hall elements 38.

Signals corresponding to the change of the input of the Hall elements 38 are converted into digital signals by the ADC 41 in the signal processing IC and then, based on the digital signals, the main CPU 33 detects a position of the CCD stage 35.

An output corresponding to an angular velocity of a camera shake is input to the ADC 41 of the signal processing IC 60 and then converted into digital signals so that an amount of the angular velocity of the camera shake as the shake amount is calculated by the main CPU 33. A correction amount is calculated based on the amount of the angular velocity of the camera shake so that output values for the coils 36 are obtained.

A photographing system includes the timing signal generator (TG) 42 configured to drive the CCD image sensor 34, the CCD image sensor 34 configured to convert an optical image imaged by the photographing lens unit 2 into electrical signals, the CDS circuit 43 configured to perform a correlated double sampling of the image signals output from the CCD image sensor 34, the AGC circuit 44 configured to appropriately amplify the analog image data from the CDS circuit 43, and the AD converter 45 configured to convert the analog image data output from the AGC circut 44 based on the electrical signals of the CCD image sensor 34 into digital signals. A part including the CDS circuit 43, the AGC circuit 44, and the A/D converter 45 is referred to as the AFE (analog front end) 61.

The oscillator 46 supplies a system clock to the signal processing IC 60 including the main CPU 33 and also supplies the system clock to the TG 42 as a clock. The TG 42 receives the clock and then supplies pixel clocks to the CCD I/F 47 of the signal processing IC 60 and the AFE 61 to synchronize pixels with each other. The TG 42 supplies CCD driving pulses as driving signals to the CCD image sensor in synchronization with the pixel clocks supplied to the AFE 61.

The digital data input from the photographing system to the signal processing IC 60 are temporarily stored as RGB data in the SDRAM 48, which constructs a frame memory as an image storing section, via the CCD-IF 47.

The signal processing IC includes the CCD I/F 47, the image processing section 49, the display I/F 53, the JPEG codec 50, the card controller 51, the ADC 41, the DAC 40, and the main CPU 33, which controls the system by use of the above-described parts.

The CCD I/F 47 outputs horizontal driving signals (HD) and vertical driving signals (VD) and, in synchronization with the above signals, receives the digital RGB signals supplied from the A/D converter 45 of the AFE 61 so that the CCD-I/F 47 writes the RGB data in the SDRAM 48 via the memory controller 52.

The image processing section 49 converts the RGB data temporarily stored in the SDRAM 48 into YUV data including luminance data Y, color difference data Cb and color difference data Cr and then rewrites them in the SDRAM 48.

The display I/F 53 sends the display data written in the SDRAM 48 to the display device 57 to display the photographed image, and the like. The display device 57 includes the LCD 5, which is included in the digital camera and on which the display data is displayed. However, the display data may be output as video signals and be displayed on the TV device, which is an external device connected to the digital camera. Here, the display data include the YUV data having Y, Cb, and Cr data of a natural image such as a photographed image, and an OSD (on screen display) data to display a photographing mode icon, and the like. The data stored in the SDRAM 48 are read out via the memory controller 52 and then sent to the display I/F 53. Thereby, the data synthesized by the display I/F 53 are output as the video data.

The JPEG codec 50 performs compression of the YUV data written on the SDRAM 48 and outputs the data encoded by a JPEG method to the SDRAM 48 in a recording operation, and performs an extension of the JPEG encoded data loaded from the memory card 71 into the YUV data and outputs the YUV data to the SDRAM 48 in a reproducing operation. The card controller 51 is controlled by the main CPU 33 to load the data stored in the memory card 71 to the SDRAM 48 and to write the data stored in the SDRAM 48 to the memory card 71.

The main CPU 33 for controlling operations of the full digital camera loads program data and control data stored in the program ROM 54 to the SDRAM 48 when the digital camera is started and controls the operations of the full digital camera system based on codes of the program data. The main CPU 33 performs a photographing operation control, settings of development processing parameters of the image processing section 49, memory controls, and display controls according to commands by the buttons of the operation unit 10, external operational commands by a remote controller (not shown), or communication operational commands by communications from the external device such as external terminals, for example, a PC (personal computer), and the like.

The operation unit 10 is configured to perform a user's instruction operations of the digital camera, more particularly, the operation unit 10 has the release button 11 to command a photographing operation, the zoom buttons 12 and 13 to set a magnification of an optical zoom and an electronic zoom, the buttons 14 to 16 to set various settings such as a selection of exposure modes from outside, the power button 17 to command on/off of the power, and the switching dial 18 to select the operating mode such as photographing/reproducing or the like.

Next, a basic sequence of the photographing operations will be explained.

If the sub CPU 56 including a microprocessor or the like detects that the power button 17 as a main switch of the digital camera is operated to turn on, the main CPU 33 performs predetermined settings of the CCD image sensor 34, the oscillator 46, the TG 42, the AFE 61, the CCD I/F 47, the image processing section 49, and the display I/F 53, and the like. According to the above settings, an optical image illuminated via the lens unit 2a and imaged on the CCD image sensor 34 is photoelectrically converted into analog signals and supplied to the AFE 61. The analog signals are processed by a gain adjustment through the AGC 44 and by an A/D conversion through the A/D converter 45 and then are output to the CCD I/F 47 as digital signals.

In the CCD I/F 47, a black level correction, and the like are performed and the processed data, that is to say, RAW-RGB data are temporarily stored in the SDRAM 48. The RAW-RGB image data stored in the SDRAM 48 are loaded to the image processing section and then processed by a γ setting, a white balance setting, an edge enhance processing, and a YCTV conversion processing and rewritten in the SDRAM 48 as YUV data. The YUV image data are loaded to the display I/F 53, and are supplied to the TV after being processed, for example, by changing magnification in horizontal and vertical directions. Each of the VD (vertical driving) signals in the YUV image data is processed to perform a monitoring of the image data before photographing as an electronical finder display.

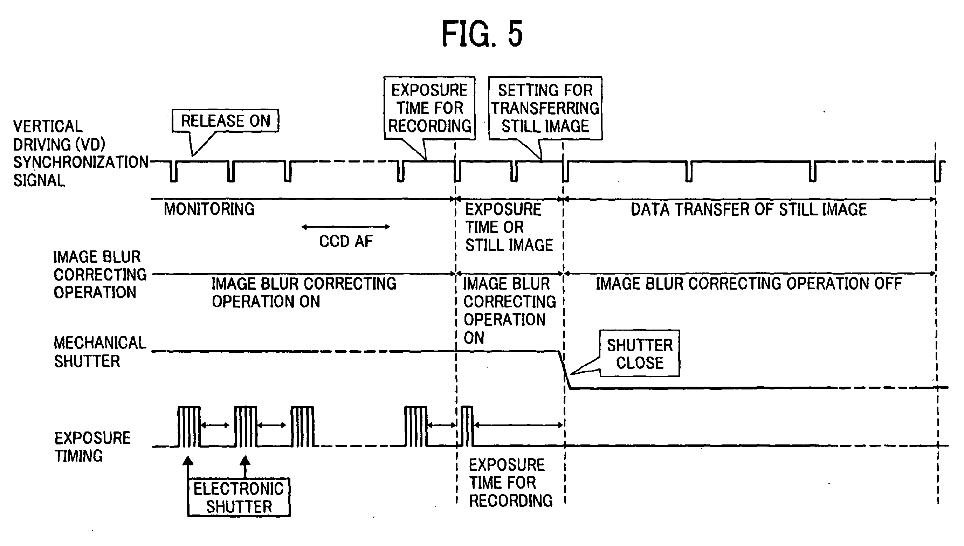

FIG. 5 shows a timing chart when photographing a still image.

When the sub CPU 56 detects that the release button 11 of the operation unit 10, that is to say, a shutter is pressed, the main CPU 33 drives a focus lens, which is at least a part of the lens unit 2a, to perform a focus operation by the so-called CCD-AF method. After performing the focus operation, the main CPU 33 performs exposure settings of the TG 42 and the AFE 61 for recording a still image. In time for starting an exposure operation, an image blur correcting operation is performed. The Hall elements 38 detect the position of the CCD stage 35 and the gyro sensor 39 detects a shake amount of the digital camera and then calculates a correction amount. Based on the correction amount, a current is applied to the coils 36 via the coil driver 37 to perform the image blur correction.

At the same time when the exposure operation is completed, the shutter is closed by driving the mechanical shutter 31 and then the image blur correction is stopped. The main CPU 33 performs data load settings of the TG 42, the AFE 61, the CCD I/F 47, and the like for loading the still image. At the same time when the exposure operation is completed, the CPU 33 starts to load the image data from the CCD image sensor 34.

The RAW-RGB image data stored in the SDRAM 48 via the CCD I/F 47 are loaded in the image processing section 49, as well as in a monitoring operation, so that a YUV conversion is performed and the YUV image data are rewritten in the SDRAM 48. The YUV image data are loaded in the JPEG codec 50 to be processed by a JPEG compression and are rewritten in the SDRAM 48. After predetermined header information and the like are added to the processed YUV image data, the processed YUV image data are stored in the memory card 71 according to a form predetermined, such as the DOS (disk operating system), or the like. In addition, at the same time, the YUV image data are sent to the display I/F 53 to be displayed on the TV, or the like.

Next, principles of an image blur correction will be explained with reference to FIG.6.

When an imaging surface (receiving light surface) of the CCD image sensor 34 is positioned at a position P1 shown in FIG.6, a subject image is projected at a position o. However, if the digital camera rotates with an angle θ, that is to say, with θx in an x direction and θy in a y direction, the imaging surface is moved at a position P2 as illustrated, and the position where the subject image is projected is moved at a position o'. Accordingly, in such a case, the imaging surface is moved in parallel by dx in the x direction and dy in the y direction, so that the projected position of the subject image is returned to the original position on the imaging surface.

A support driving mechanism of the CCD image sensor 34, which moves the imaging surface, is shown in FIGs.7A to 7C, 8A and 8B. FIG.7A is a front view showing an appearance of the support driving mechanism, FIG.7B is a side view showing an appearance thereof, and FIG.7C is a back view showing an appearance thereof. In FIGs. 7A to 8C, in addition to the CCD image sensor 34, the CCD stage 35, the coils 36, and the Hall elements 38, an intermediate movable frame 101, a fixed frame 102, magnets 103, intermediate slide shafts 104 and fixed slide shafts 105 are shown.

The CCD stage 35 is supported by the two intermediate slide shafts 104, and the CCD stage 35 is disposed so as to be capable of sliding along the intermediate slide shaft 104 in relation to the intermediate movable frame 101. On the CCD stage 35, the CCD image sensor 34, the two Hall elements 38, and the four coils 36, in this case, are mounted, so that the above parts move integrally with the CCD stage 35. The intermediate movable frame 101 is supported by the two fixed slide shafts 105 provided in parallel to each other in the fixed frame 102, and the intermediate movable frame 101 is movably disposed along the fixed slide shafts 105 in relation to the fixed frame 102. The fixed frame 102 is fixed on the main body of the digital camera, and, in this case, the four magnets 103 are fixed on the fixed frame 102.

Accordingly, the CCD stage 35 is capable of two-dimensionally moving in relation to the fixed frame 102. If a positional relationship between the CCD stage 35 and the fixed frame 102 changes, a positional relationship between the magnet 104 and the Hall elements 38 changes and this causes a change of outputs of the Hall elements 38. In this case, the Hall elements 38 are provided to detect a positional change in two directions perpendicular to each other, and a positional relationship between the CCD stage 35 and the fixed frame 102 can be identified based on outputs of the Hall elements 38. Furthermore, in this case, two pairs of the coil 36 and the magnet 104 which permit a movement along a first direction, and other two pairs of the coil 36 and the magnet 104 which permit a movement along a second direction perpendicular to the first direction are provided so that driving forces along the first and second directions can be generated by applying currents to the coils 36.

Depending on a dimension of the magnetic field generated from the coils 36, a movement amount of the CCD stage 35, that is to say, of the CCD image sensor 34 changes. In addition, an intensity of the magnetic field is detected by the Hall elements 38 to calculate movement amounts in each direction.

A target position at which the CCD image sensor 34 is to be moved is determined based on inputs from the gyro sensor 39. The gyro sensor 39 is disposed to be capable of detecting rotations in a pitch (PITCH) direction and in a yaw (YAW) direction. An output of the gyro sensor is converted by the A/D conversion with an interval of T (s) and loaded.

When,

ω yaw (t) ... instant angular velocity in YAW direction
ω pitch (t)... instant angular velocity in PITCH direction
θ yaw (t)... angular variation in YAW direction
θ pitch (t)... angular variation in PITCH direction

Dyaw (t)... movement amount of image in X-direction corresponding to rotation in YAW direction.
Dpitch (t)... movement amount of image in Y-direction corresponding to rotation in PITCH direction,
θ yaw (t) and θ pitch (t) are obtained by the following relational expressions,

$$\theta \text{ yaw } (t) = \Sigma \, \omega \text{ yaw } (i) \cdot T \quad (i: 0 \text{ to } t) \dots (1)$$

$$\theta \text{ pitch } (t) = \Sigma \, \omega \text{ pitch } (i) \cdot T \quad (i: 0 \text{ to } t) \dots (2).$$

On the other hand, a focal length f is determined from a zoom point zp and a focal point fp. The following expressions correspond to the correction amount by which the CCD image sensor 34 is to be moved.

$$\text{Dyaw } (t) = f * \tan ( \theta \text{ yaw } (t) ) \dots (3)$$

$$\text{Dpitch } (t) = f * \tan ( \theta \text{ pitch } (t) ) \dots (4).$$

FIGs.9 to 11 show a relationship between an angle of the camera shake and the correction amount of the image by which the CCD image sensor is to be moved. FIG.9 shows a geometric relationship of the correction amount in relation to the angle of the camera shake and the focal length. FIG.10A shows a conversion table of the focal length, which is used for conversion from a real focal length of the digital camera according to this embodiment into a focal length of a conventional silver salt film camera of 35 mm (35 mm focal length). In the case of a digital camera, an area of the imaging surface of the image pickup device such as a CCD or the like is smaller than the general 35 mm-silver salt film, and therefore the real focal length is shorter than the focal length of the 35 mm-silver salt film. Furthermore, the area of the image pickup device such as the CCD or the like is not uniformly standardized, and there are various types of the image pickup devices, so that the area of the imaging surface differs in each CCD image sensor which is used. Therefore, the focal length is required to be converted into the focal length in the general 35 mm silver salt film camera, and then it is necessary for the focal length and the field angle to be easily understood. With the 35 mm focal length, 28 mm is a wide angle side, 135 mm is a telescopic side, and 200 mm is a further telescopic side. FIG.10B shows a relationship of the angle of the camera shake and the correction amount at each focal length. FIG.11 graphically shows the relationship of the angle of the camera shake and the correction amount shown in FIG.10B.
When a servocontrol is performed to move the CCD image sensor by the correction amount, as shown in FIG. 12, the movement amount of the CCD image sensor is calculated based on the output from the gyro sensor 39 in the yaw direction and the pitch direction with a performance cycle of a period T=0.25 ms. According to the result of the calculation, the CCD image sensor 34 is moved to the target position by applying current to the coils 36. FIG.13 shows a relationship between the output of the gyro sensor 39 due to the camera shake and the movement amount to be corrected. The movement amount corresponds to the target position where the CCD image sensor 34 is to be moved, and the coils 36 are driven according to the movement amount.

(Example)

Next, operations of the image blur correcting device according to an example will be explained.
In the digital camera where the image blur correcting device is applied, a threshold value Th1 is provided for the output of the gyro sensor 39. A masking of the angular velocity detection signals of the camera shake, which are less than the threshold value Th1 is performed to prevent the masked angular velocity detection signals from being used in the image blur correction. Here, an operation, in which an insensitive range in the angular velocity detection signals detected for the image blur correction is provided so as not to be used in the image blur correction, is referred to as the masking, or a mask processing. FIG.14A shows the output of the gyro sensor in this case, FIG.14B shows the movement amount in the case where the masking is not performed, and FIG.14C shows the movement amount in the case where the masking is performed. Furthermore, in the present invention, the threshold value Th1 is a threshold value with respect to an absolute value of a variable amplitude and therefore used for comparing the absolute value and the threshold value Th1, for example, the absolute value of the variable amplitude is more or less than the threshold value Th1, or the absolute value is the threshold value Th1 or more, or the threshold value Th1 or less, exceeds the threshold value Th1, or the like. That is to say, the comparison is performed with the absolute value.

The detection output signals of the gyro sensor 39 (referred as to "gyro output") is affected by noises from outside, such as a power noise, a CCD driving signal noise, and the like, as well as output errors caused by the gyro sensor 39. Accordingly, even when the digital camera is fixed on a tripod stand or the like, low noise signals are output as shown in FIG.14A. The result in the case where the noise data are calculated corresponds to the movement amount in the case where the masking is not performed as shown in FIG.14B.

As illustrated, even when the camera shake does not occur, the image blur correcting operation is performed to move the CCD image sensor 34 (the CCD stage 35) so that an image blur due to the inappropriate image blur correcting operation occurs. On the other hand, in FIG.14C, the masking of the output of the gyro sensor 39 which is less than the threshold value Th1 is performed and the masked output of the gyro sensor 39 is not used in the image blur correcting operation. Thereby, low signals are masked and the inappropriate image blur correcting operation is not performed.

As mentioned above, FIG.15 shows a flowchart of the image blur correction according to the example, in which the masking step in which an insensitive range corresponding to the low detection signals of the camera shake, which is less than the predetermined angular velocity which is not used in the image blur correction (the output of the gyro sensor 39 is treated as zero) is added.

As shown in FIG.15, when the image blur correcting operation is started, the angular velocity detection output of the gyro sensor 39 is loaded (step S11), and then it is determined whether or not the detection output is less than the threshold value Th1 (step S12). If the detection output of the gyro sensor 39 is less than the threshold value Th1 in step S12, the detection output of the gyro sensor 39 is masked and set to zero (step S13). At this time, the output of the gyro sensor 39 is considered to be zero and used for calculating the movement amount (step S14), and the coils 36 are driven based on the movement amount. Accordingly, virtually, the coils 36 are not driven (step 15). If the detection output of the gyro sensor 39 is equal to or more than the threshold value Th1 in step S12, the output of the gyro sensor 39 is used without being set to zero in step S14 to calculate the movement amount, so that the coils 36 are driven according to the obtained movement amount in step S15.

After step S15, it is determined whether or not an exposure operation is completed (step S16), and if the exposure operation is not completed, the process returns to step S11 to periodically repeat operations in which the angular velocity detection output of the gyro sensor 39 is loaded. If it is determined that the exposure operation is completed in step S16, the image blur correcting operation is completed.

In the above example, an input voltage of the ADC 41 is, for example, 3.3 V with 10 bit accuracy, and output of the ADC 41 is to be set to 512 when the output of the gyro sensor 39 is zero. Since output variation of the ADC 41 due to the noise generated when the digital camera is fixed is 512 $\pm$4 or less, the threshold value Th1 is set to $\pm$6 in consideration of quantization errors and the like, so that the output variation in a range of 512$\pm$5 is not used in the image blur correcting operation.

In the above masking, the angular velocity loaded from the ADC 41 is compared with the threshold value Th1 by the main CPU and it is determined whether the angular velocity is less than the threshold value Th1 or is the threshold value Th1 or more. However, the masking may be performed by adding a hardware disposed between the gyro sensor 39 and the ADC 41 to form an insensitive range. By the hardware, the signals are masked across the threshold value Th1 so that the detection outputs which are less than the threshold value Th1 become insensitive.

(First Embodiment)

A first embodiment of the present invention provides further high accuracy in the image blur correction in relation to the example.

In the case where the image blur correction is performed according to the aforementioned example as shown in FIG.16A, if the detection output of the angular velocity of the gyro sensor 39 as the shake amount varies sinusoidally, the angular velocity data after the masking in which the detection output less than the threshold value is insensitive is performed are dramatically or discontinuously decreased toward and increased from zero at the threshold value as a boundary, as shown in FIG.16B. If the movement amount of the CCD image sensor 34 is calculated based on the above data, distorted correction amount data as shown by a solid line in FIG.16C, which deviate from appropriate correction amount data, that is, real movement amount data corresponding to the proper camera shake shown by a dotted line are obtained.

FIGs.16A to 16C show a case where the output of the gyro sensor 39 has a sinusoidal period, whereas FIGs. 17A to 17C show a case where the output of the gyro sensor 39 has plural periods, for example, 5 periods. If the angular detection output of the gyro sensor 39 varies as shown in FIG.17A, the angular velocity data after being processed by the masking where the output less than the threshold value Th1 is insensitive are repeatedly dramatically or discontinuously decreased toward and increased from zero as shown in FIG.17B. If the movement amount of the CCD image sensor 34 is calculated based on the above data, distorted correction amount data as shown by a solid line in FIG.17C, which deviate from appropriate correction amount data, that is, real movement amount data corresponding to the proper camera shake shown by a dotted line are obtained.

The correction amount shown by the solid line in each of FIGs.16C and 17C differs significantly from the appropriate correction amount shown by the dotted line so that the appropriate image blur correction cannot be performed.

Particularly, in order to reduce the affect of the noise, and the like, it is necessary for the threshold value Th1 to be large. However, if the threshold value Th1 is too large, substantial errors between the real movement amount of the imaging surface and the correction amount occur as illustrated so that the image blur correction is incompletely performed. In other words, the output of the gyro sensor 39, which is the threshold value ±Th1 or more is used in the image blur correction and whereas the output less than the threshold value Th1 is not used. That is to say, as the threshold value Th1 becomes larger, the difference between the calculated movement amount and the appropriate movement amount becomes greater.

In order to solve the above-mentioned problems and therefore to improve the accuracy of the image blur correction, in the first embodiment of the present invention, a threshold value Th2 is used in addition to the threshold value Th1. The threshold value Th2 is used for determining whether or not the digital camera is in a sufficiently fixed state by the tripod stand, or the like.

That is to say, the image blur correcting according to the first embodiment of the present invention further includes a second determining unit configured to determine whether or not the shake amount detected by the detector such as the gyro sensor 39 is equal to or larger than a second threshold value Th2. The correction controller, that is to say, the signal processing IC 60 has a first decreasing unit configured to decrease the first threshold value Th1 in the first determining unit when it is determined that the shake amount detected by the detector is equal to or larger than the second threshold value by the second determining unit. Here, the signal processing IC 60 may serve as the second determining unit and the first decreasing unit.

That is to say, the output variation of the ADC 41 due to noise generating when the digital camera is fixed is, for example, 512±4 or less (in absolute value). On the other hand, by measuring the output variation of the ADC 41 when the digital camera is held by hand, it is found that the output variation is, for example, 512±10 or more (in absolute value). Accordingly, the threshold value Th2 to determine whether or not the digital camera is in a fixed state is 10.

FIGs.18A to 19C show improved results of the image blur correction, which are obtained by adding the threshold value Th2 in the image blur correcting operation.

The image blur correcting device according to the embodiment may further include a first counter configured to count a first counting number which is obtained by counting up a continuous number of times when the second determining unit determines that the shake amount is equal to or larger than the second threshold value Th2. The correction controller has a second decreasing unit configured to decrease the first threshold value Th1 in the first determining unit when the first counting number becomes a first threshold counting number or more. In this case, the first counter may have a first synchronizing unit configured to perform a counting in synchronization with a periodic detection of the detector. Here, the signal processing IC 60 may serve as the first counter, the second decreasing unit, and the first synchronizing unit.

FIGs.18A to 18C show detection output data of the gyro sensor 39, angular velocity data after performing a masking, and obtained correction amount data, respectively, in a case where the detection output of the gyro sensor 39 varies for a period. In FIGs.18A to 18C, at an initial part where the output of the gyro sensor 39 starts to vary, the output of the gyro sensor 39, in which the output less than the threshold value Th1 is masked not to be treated or considered, is used to calculate the correction amount. Therefore, a slight difference between the real movement amount of the imaging surface and the obtained correction amount occurs. However, in repeated samplings with timings shown by fine vertical lines in FIGs.18A to 18C, a process in which the threshold value Th1 for the masking, which is used for the masking, is set to zero when it is determined that the output of the gyro sensor 39 exceeds the threshold value Th2 continuously four times is performed in the repeated samplings. Accordingly the output of the gyro sensor 39 is not processed and controlled by the masking after the determination. Therefore, all the output data of the gyro sensor 39 are used to calculate the correction amount after the determination so that the deviation of the correction amount from the real movement amount of the imaging surface, that is to say, errors are reduced in relation to FIGs.16A to 16C. As the errors between the real movement amount of the imaging surface and the correction amount become smaller, the accuracy in the image blur correction becomes higher, so that the correction accuracy can be improved by setting the masking amount to zero as shown in FIGs.18A to 18C.

The accuracy of the image blur correction is more markedly improved in a case where the output of the gyro sensor 39 has a variation with plural periods, for example, three periods as shown in FIGs.19A to 19C than in a case where the output of the gyro sensor 39 has a variation for a period as shown in FIGs.18A to 18C.

That is to say, FIGs.19A to 19C show detection output data of the gyro sensor 39, angular velocity data after performing a masking, and obtained correction amount data, respectively, in a case where the detection output of the gyro sensor 39 varies with three periods. In FIGs.19A to 19C, at an initial part where the output of the gyro sensor 39 starts to vary, the output of the gyro sensor 39, in which the output less than the threshold value Th1 is masked not to be treated or considered, is used to calculate the correction amount. Therefore, a slight difference between the real movement amount of the imaging surface and the obtained correction amount occurs. However, in repeated samplings with timings shown by fine vertical lines in FIGs.19A to 19C, a process in which the threshold value Th1 for the masking is set to zero when it is determined that the output of the gyro sensor 39 exceeds the threshold value Th2 continuously four times is performed in the repeated samplings. Accordingly the output of the gyro sensor 39 is not processed and controlled by the masking after the determination. Therefore, all the output data of the gyro sensor 39 are used to calculate the correction amount after the determination so that the deviation of the correction amount from the real movement amount of the imaging surface, that is to say, errors are markedly reduced after the second period in relation to FIGs.17A to 17C. Since as the errors between the real movement amount of the imaging surface and the correction amount become smaller, the accuracy in the image blur correction becomes higher, and the correction accuracy can be improved by setting the masking amount to zero as shown in FIGs.19A to 19C.

The above-mentioned image blur correcting operation will be explained with reference to flowcharts shown in FIGs.20A and 20B. FIG.20A is the flowchart of a main routine of the image blur correcting operation and FIG.20B is the flowchart of a sub routine in which the threshold value Th1 is changed.

As shown in FIG.20A, when the image blur correcting operation is started, the angular velocity detection output of the gyro sensor 39 is loaded (step S21), and the subroutine for correcting operation of the threshold value Th1 shown in FIG.20B is performed (step S22). After the subroutine for the correcting operation of the threshold value Th1 in step S22 is completed, it is determined whether or not the detection output is less than the threshold value Th1 (step S23). If it is determined that the detection output of the gyro sensor 39 is less than the threshold value Th1 in step S23, the detection output of the gyro sensor 39 is masked and set to zero (step S24). At this time, the output of the gyro sensor 39 is considered to be zero and used for calculating the movement amount (step S25), and then the coils 36 are driven based on the calculated movement amount. Accordingly, virtually, the coils 36 are not driven (step 26). If the detection output of the gyro sensor 39 is equal to or more than the threshold value Th1 in step S23, the output of the gyro sensor 39 is used without being set to zero in step S25 to calculate the movement amount, so that the coils 36 are driven according to the obtained movement amount in step S26. After step S26, it is determined whether or not an exposure operation is completed (step S27), and if the exposure operation is not completed, the process returns to step S21 to periodically repeat operations in which the angular velocity detection output of the gyro sensor 39 is loaded. If it is determined that the exposure operation is completed in step S27, the image blur correcting operation is completed.

In the subroutine for correcting the threshold value Th1 in step S22, as shown in FIG.20B, it is determined whether or not the angular velocity detection output of the gyro sensor 39 is equal to or more than the threshold value Th2 (step S31), and if it is determined that the angular velocity detection output of the gyro sensor 39 is equal to or more than the threshold value Th2, a shake counter in the first counter is incremented by one (+1) (step S82). If it is determined that the angular velocity detection output of the gyro sensor 39 is less than the threshold value Th2, the shake counter is reset to zero (step S33). Accordingly, the shake counter is incremented only in a case where the detection outputs which are equal to or more than the threshold value Th2 are continuously detected in continuous samplings, whereas the shake counter is reset in a case where the detection outputs which are equal to or more that the threshold value Th2 are not continuously detected in the continuous samplings. Next, it is determined whether or not the shake counter becomes four or more, that is to say, exceeds three (step S34), and if it is determined that the shake counter is four or more, the shake counter is set to zero or a lower number (step S35), and then the subroutine for correcting the threshold value Th1 is completed. If it is determined that the shake counter is less than four, that is to say, is not equal to or more than four, the subroutine for correcting the threshold value Th1 is directly completed.

As mentioned above, each time when the angular velocity is loaded from the gyro sensor 39, the subroutine for correcting the threshold value Th1 is performed. In the subroutine for correcting the threshold value Th1, it is determined whether or not the angular velocity is equal to or more than the threshold value Th2, and if it is determined that the angular velocity is equal to or more than the threshold value Th2, the shake counter is incremented by one. If the angular velocity is less than the threshold value Th2, the shake counter is reset to zero. Next, it is determined whether or not the shake counter is equal to or more than four, that is to say, whether or not the angular velocities which are equal to or more than the threshold value Th2 are continuously detected in four continuous samplings. If it is determined that the angular velocities in the four continuous samplings are continuously equal to or more than the threshold value Th2, the threshold value Th1 corresponding to the mask amount is set to zero or a lower number.

The aforementioned subroutine for correcting the threshold value Th1 is performed in synchronization with each sampling of the gyro sensor 39. In this case, a term for which the first counter counts the first counting number with respect to the first threshold counting number may be shorter than a term for which the moving unit moves the imaging surface. That is to say, since the gyro sensor 39 performs a sampling at each 0.25 ms as mentioned above with reference to FIG.12, it takes about 1 ms to correct the threshold value Th1 by determining that the shake counter is equal to four. In the digital camera according to this embodiment of the present invention, an exposure time in which the image blur correction is required is, for example, 1/250 seconds (4 ms) or more. Accordingly the accuracy of the image blur correction can be improved for the later 3 ms even in a case of the shortest exposure time where the image blur correction is required.

In addition, although in FIGs.18A to 19C, a case where the threshold value Th1 is set to zero is described, the above-mentioned threshold value Th1 may be set to a lower value, for example, "two" which is half of the above mentioned "four". This is because an extremely low noise is masked.

The processes after the above-mentioned steps are similar to the example, that is, the movement amount is calculated based on the angular velocity which is processed by the masking, and the coils 36 are driven to perform the image blur correction.

In the first embodiment, although it is determined whether or not the shake counter is equal to or more than a predetermined threshold value, it may be that the threshold value of the shake counter is, for example, one. In this case, only once the angular velocity becomes equal to or more than the threshold value Th2, the threshold value Th1 corresponding to the masking amount can be changed to be smaller. As mentioned above, the number of determining times or threshold values may be determined depending on each digital camera system. Furthermore, the threshold value Th2 is set to a high value of the angular velocity which is not generated in a state where the digital camera is fixed so that only one determination is necessary to determine that the digital camera is not in a fixed state. If the threshold value Th2 is set to a smaller value, it is preferable that the determining number be two or more so that a large noise is advantageously prevented from affecting the determination, that is, from causing errors.

(Second Embodiment)

A second embodiment of the present invention provides further high accuracy in the image blur correction in relation to the example. In the second embodiment, signed angular velocity detection outputs are used to obtain information on whether or not a sign, that is, plus (+) or minus (-), of the angular velocity detection output is changed, whereas the absolute values of the angular velocity detection outputs are used in the first embodiment.

That is to say, the image blur correcting device according to the second embodiment of the present invention further includes a shake direction determining unit configured to determine a shake direction based on a result obtained by periodically detecting the shake amount through the detector; and a second counter configured to count a second counting number which is obtained by counting up a continuous number of times when the shake direction determined by the shake direction determining unit is a same direction. The correction controller has a third decreasing unit configured to decrease the first threshold value in the first determining unit when the second counting number becomes a second threshold counting number or more. In this case, the second counter may have a first synchronizing unit configured to perform a counting in synchronization with a periodic detection of the detector. Here, the signal processing IC 60 may serve as the shake direction determining unit, the second counter, and the first synchronizing unit.

In the second embodiment, the threshold value Th1 corresponding to the masking amount is changed based on the information of the sign of the angular velocity detection output.

The above-mentioned image blur correcting operation will be explained with reference to flowcharts shown in FIGs.21A and 21B. FIG.21A is the flowchart of a main routine of the image blur correcting operation and FIG.21B is the flowchart of a sub routine in which the threshold value Th1 is changed.

As shown in FIG.21A, when the image blur correcting operation is started, the angular velocity detection output of the gyro sensor 39 is loaded (step S41), and the subroutine for the correcting operation of the threshold value Th1 shown in FIG.21B is performed (step S42). After the subroutine for the correcting operation of the threshold value Th1 in step S42 is completed, it is determined whether or not the detection output is less than the threshold value Th1 (step S43). If it is determined that the detection output of the gyro sensor 39 is less than the threshold value Th1 in step S23, the detection output of the gyro sensor 39 is masked and set to zero (step S44). At this time, the output of the gyro sensor 39 is considered to be zero and used for calculating the movement amount (step S45), and then the coils 36 are driven based on the calculated movement amount. Accordingly, virtually, the coils 36 are not driven (step 46).

If the detection output of the gyro sensor 39 is equal to or more than the threshold value Th1 in step S43, the output of the gyro sensor 39 is used without being set to zero in step S45 to calculate the movement amount, so that the coils 36 are driven according to the obtained movement amount in step S46. After step S46, it is determined whether or not an exposure operation is completed (step S47), and if the exposure operation is not completed, the process returns to step S41 to periodically repeat operations in which the angular velocity detection output of the gyro sensor 39 is loaded. If it is determined that the exposure operation is completed in step S47, the image blur correcting operation is completed.

In the subroutine for correcting the threshold value Th1 in step S42, as shown in FIG.21B, it is determined whether or not the sign of the angular velocity detection output is changed from that of a previous angular velocity detection output (step S51), and if it is determined that the sign of the angular velocity detection output is not changed, that is to say, the same as that of the previous detection output, a sign counter in the second counter is incremented by one (+1) (step S52). If it is determined that the sign of the angular velocity detection output of the gyro sensor 39 is changed, that is to say, not the same as that of the previous detection output, the sign counter is reset to zero (step S53). Accordingly, the sign counter is incremented only when the same signs are detected in continuous samplings.

When the same signs are not detected in the continuous samplings, that is to say, when the sign is changed from the previous sign, the sign counter is reset for next counting.

Next, it is determined whether or not the sign counter is eight or more, that is to say, the sign counter exceeds 7 (step S54), and if it is determined that the sign counter is equal to or more than 8, the threshold value Th1 is changed to be zero or a lower value (step S55), and then the subroutine for correcting the threshold value Th1 is completed. In step S54, if the sign counter is not equal to or more than 8, that is, the sign counter is less than 8 or 7 or less, the subroutine for correcting the threshold value Th1 is completed.

As mentioned above, each time when the angular velocity is loaded from the gyro sensor 39, the subroutine for correcting the threshold value Th1 is performed. In the subroutine for correcting the threshold value Th1, it is determined whether or not the sign of the angular velocity, that is to say, a direction of the camera shake is the same as that of the previous angular velocity, and if it is determined that the sign of the angular velocity is same as that of the previous angular velocity, the sign counter is incremented by one. If the sign of the angular velocity is not the same as that of the previous angular velocity, the sign counter is reset to zero. In addition, if the output of the ADC 41 has a center value of 512, the sign is determined depending on whether or not the detection output is larger than 512.

Next, it is determined whether or not the sign counter is equal to or more than eight, that is to say, whether or not the angular velocities which have a same sign are continuously detected in eight continuous samplings. If it is determined that the sign of the angular velocities in the eight continuous samplings are continuously the same, the threshold value Th1 corresponding to the mask amount is set to zero or a lower number than the initial value.

If the digital camera is in a fixed state, the detection output of the gyro sensor 39 is largely affected by noises, and the detection output should randomly vary in plus side and minus side around a center value, that is, zero. However, if the angular velocities having the same sign, that is to say, the camera shake in the same direction are continuously output in more than the predetermined times of the continuous samplings, it can be determined that the digital camera is not in a fixed state, more particularly, that the digital camera moves in one direction. Accordingly, the threshold value Th1 corresponding to the masking amount is decreased.

The correction controller may have a second synchronizing unit, which may be included in the signal processing IC 60 and is configured to perform a determination whether or not the first threshold value Th1 is to be decreased in synchronization with a periodic detection of the detector. That is to say, the aforementioned subroutine for correcting the threshold value Th1 is performed in synchronization with each sampling of the gyro sensor 39. In this case, since the gyro sensor 39 performs a sampling at each 0.25 ms as mentioned above with reference to FIG.12, it takes about 2 ms to correct the threshold value Th1 by determining that the sign counter is equal to eight. In the digital camera according to this embodiment of the present invention, an exposure time in which the image blur correction is required is, for example, 1/250 second (4 ms) or more. Accordingly the accuracy of the image blur correction can be improved for the later term even in a case of the shortest exposure time where the image blur correction is required.

The processes after the above-mentioned steps are similar to the example, that is, the movement amount is calculated based on the angular velocity which is processed by the masking, and the coils 36 are driven to perform the image blur correction.

(Third Embodiment)

A third embodiment of the present invention is provided by a combination of the first and second embodiments.

The image blur correcting operation according to the third embodiment will be explained with reference to flowcharts shown in FIGs.22A and 22B. FIG.22A is the flowchart of a main routine of the image blur correcting operation and FIG.22B is the flowchart of a sub routine in which the threshold value Th1 is changed.

The image blur correcting device according to the third embodiment of the present invention includes a second determining unit configured to determine whether or not each of the shake amounts periodically detected by the detector is equal to or larger than a second threshold value, a first counter configured to count a first counting number which is obtained by counting up a continuous number of times when the second determining unit determines that each of the shake amounts is equal to or larger than the second threshold value, a shake direction determining unit configured to determine a shake direction based on a result obtained by periodically detecting the shake amount through the detector, and a second counter configured to count a second counting number which is obtained by counting up a continuous number of times when the shake direction determined by the shake direction determining unit is the same direction. The correction controller has a fourth decreasing unit configured to decrease the first threshold value in the first determining unit when the first counting number becomes a first threshold counting number or more and the second counting number becomes a second threshold counting number or more.

As shown in FIG.22A, when the image blur correcting operation is started, the angular velocity detection output of the gyro sensor 39 is loaded (step S61), and the subroutine for correcting operation of the threshold value Th1 shown in FIG.22B is performed (step S62). After the subroutine for the correcting operation of the threshold value Th1 in step S62 is completed, it is determined whether or not the detection output is less than the threshold value Th1 (step S63).

If it is determined that the detection output of the gyro sensor 39 is less than the threshold value Th1 in step S63, the detection output of the gyro sensor 39 is masked and set to zero (step S64). At this time, the output of the gyro sensor 39 is considered to be zero and used for calculating the movement amount (step S65), and then the coils 36 are driven based on the calculated movement amount. Accordingly, virtually, the coils 36 are not driven (step 66).

If the detection output of the gyro sensor 39 is equal to or more than the threshold value Th1 in step S63, the output of the gyro sensor 39 is used without being set to zero in step S65 to calculate the movement amount, so that the coils 36 are driven according to the obtained movement amount in step S66.

After step S66, it is determined whether or not an exposure operation is completed (step S67), and if the exposure operation is not completed, the process returns to step S61 to periodically repeat operations in which the angular velocity detection output of the gyro sensor 39 is loaded. If it is determined that the exposure operation is completed in step S67, the image blur correcting operation is completed.

In the subroutine for correcting the threshold value Th1 in step S62, as shown in FIG.22B, it is determined whether or not the angular velocity detection output of the gyro sensor 39 is equal to or more than the threshold value Th2 (step S71), and if it is determined that the angular velocity detection output of the gyro sensor 39 is equal to or more than the threshold value Th2, a counter is incremented by one (+1) (step S72). If it is determined that the angular velocity detection output of the gyro sensor 39 is less than the threshold value Th2, the counter is reset to zero (step S73). Accordingly, the counter is incremented only in a case where the detection outputs which are equal to or more than the threshold value Th2 are continuously detected in continuous samplings, whereas the counter is reset in a case where the detection outputs which are equal to or more than the threshold value Th2 are not continuously detected in the continuous samplings.

Next, it is determined whether or not a sign, that is, plus (+) or minus (-) of the angular velocity detection output is changed from that of a previous angular velocity detection output (step S74), and if it is determined that the sign of the angular velocity detection output is not changed, that is to say, same as that of the previous detection output, a sign counter is incremented by one (+1) (step S75). If it is determined that the sign of the angular velocity detection output of the gyro sensor 39 is changed, that is to say, not the same as that of the previous detection output, the sign counter is reset to zero (step S76). Accordingly, the sign counter is incremented only when the same signs are detected in continuous samplings. When the same signs are not detected in the continuous samplings, that is to say, when the sign is changed from the previous sign, the sign counter is reset for next counting.

Next, it is determined whether or not the counter becomes four or more, that is to say, exceeds three (step S77), and if it is determined that the counter is four or more, it is determined whether or not the sign counter is eight or more, that is to say, exceeds seven (step S78). In step S78, if it is determined that the sign counter is equal to or more than 8, the threshold value Th1 is changed to be zero or a lower value (step S79), and then the subroutine for correcting the threshold value Th1 is completed. In step S77, if it is determined that the counter is less than four, that is to say, is not equal to or more than four, the subroutine for correcting the threshold value Th1 is directly completed, and in step S78, if the sign counter is not equal to or more than 8, that is, the sign counter is less than 8 or 7 or less, the subroutine for correcting the threshold value Th1 is completed.

(Fourth Embodiment)

A fourth embodiment of the present invention is provided by a combination of the first and second embodiments. In the fourth embodiment, the counter and the sign counter have the same value, and therefore only one counter is used so that the processes can be simplified.

The image blur correcting operation according to the fourth embodiment will be explained with reference to flowcharts shown in FIGs.23A and 23B. FIG.23A is the flowchart of a main routine of the image blur correcting operation and FIG.23B is the flowchart of a sub routine in which the threshold value Th1 is changed.

As shown in FIG.23A, when the image blur correcting operation is started, the angular velocity detection output of the gyro sensor 39 is loaded (step S81), and the subroutine for the correcting operation of the threshold value Th1 shown in FIG.23B is performed (step S82). After the subroutine for the correcting operation of the threshold value Th1 in step S82 is completed, it is determined whether or not the detection output is less than the threshold value Th1 (step S83). If it is determined that the detection output of the gyro sensor 39 is less than the threshold value Th1 in step S83, the detection output of the gyro sensor 39 is masked and set to zero (step S84). At this time, the output of the gyro sensor 39 is considered to be zero and used for calculating the movement amount (step S85), and then the coils 36 are driven based on the calculated movement amount. Accordingly, virtually, the coils 36 are not driven (step 86).

If the detection output of the gyro sensor 39 is equal to or more than the threshold value Th1 in step S83, the output of the gyro sensor 39 is used without being set to zero in step S85 to calculate the movement amount, so that the coils 36 are driven according to the obtained movement amount in step S86.

After step S66, it is determined whether or not an exposure operation is completed (step S87), and if the exposure operation is not completed, the process returns to step S81 to periodically repeat operations in which the angular velocity detection output of the gyro sensor 39 is loaded. If it is determined that the exposure operation is completed in step S87, the image blur correcting operation is completed.

In the subroutine for correcting the threshold value Th1 in step S82, as shown in FIG.23B, it is determined whether or not the angular velocity detection output of the gyro sensor 39 is equal to or more than the threshold value Th2 (step S81), and if it is determined that the angular velocity detection output of the gyro sensor 39 is equal to or more than the threshold value Th2, it is determined whether or not a sign, that is, plus (+) or minus (-) of the angular velocity detection output is changed from that of a previous angular velocity detection output (step S92). If it is determined that the sign of the angular velocity detection output is not changed, that is to say, the same as that of the previous detection output, a counter is incremented by one (+1) (step S93). If it is determined that the angular velocity detection output of the gyro sensor 39 is less than the threshold value Th2, the counter is reset to zero (step S94).

In addition, if it is determined that the sign of the angular velocity detection output of the gyro sensor 39 is changed, that is to say, not the same as that of the previous detection output in step S92, the counter is reset to zero in step S94. Accordingly, the counter is incremented only when the same signs are detected as well as the angular velocity detection output of the gyro sensor 39 being equal to or more than the threshold value Th2 in the continuous samplings. In the other case, that is, when the same signs are not detected and/or the angular velocity detection output of the gyro sensor 39 is less than the threshold value Th2 in the continuous samplings, the counter is reset for next counting.

Next, it is determined whether or not the counter becomes three or more, that is to say, exceeds two (step S95), and if it is determined that the counter is three or more, the threshold value Th1 is changed to be zero or a lower value (step S96), and then the subroutine for correcting the threshold value Th1 is completed. In step S95, if it is determined that the counter is less than three, that is to say, is not equal to or more than three, the subroutine for correcting the threshold value Th1 is directly completed.

Although in the above-mentioned embodiments, the output of the gyro sensor 39 is loaded to perform the image blur correction at the same time as the exposure operation is started, the present invention is not limited thereto. For example, in a case where the gyro sensor 39 starts to output the angular velocity data before the exposure operation is started, and it can be determined that the digital camera is not in a fixed state, it may be that the masking amount is set to zero before the exposure operation is started. Accordingly, the errors between the real movement amount of the imaging surface and the correction amount of the camera shake, which slightly remains, for example, in FIGs.18 and 19 occur.

Although in the above-mentioned embodiments, the image blur correcting device of the present invention is used in the digital camera; the present invention is not limited thereto. The image blur correcting method according to the embodiments of the present invention may be applied to, for example, an imaging apparatus having an image blur correcting function, various types of cameras, or a lens device for a camera.

In addition, at least a part of the system configurations of the present invention may be achieved by a general computer system as well as the exclusive system being used. For example, the system is configured such that programs to perform the above-mentioned operations are installed to the computer system from a recording medium in which the programs are stored to perform the above-mentioned operations. By installing the programs, the programs are stored in a memory in the computer system or the recording medium such as a hard disk to perform the operations in the system.

In addition, the above programs may be registered in an FTP (File Transfer Protocol) server provided on a communication network such as the internet, so that the programs are distributed via the network to an FTP client. The above programs may also be registered in a server in a communication network so that the programs are distributed via the network. Here, the programs are activated and are run under controls of an Operating System (OS) so that the above-mentioned operations can be achieved. Furthermore, the programs may be run while being transferred via the communication network so that the above-mentioned operations can be achieved.

According to the embodiments of the present invention, the following advantageous effects can be achieved. A needless correcting operation which is performed based on errors or inappropriate data in a detection of a camera shake is controlled and even if it is inappropriately determined that the image blur correction is required, inappropriate inoperation can be effectively prevented, so that the image blur correcting device, the image blur correcting method, and the computer-readable recording medium in which the program to perform the image blur correction is stored, by which a sufficiently appropriate image blur correction is performed , can be provided.

According to an embodiment of the present invention, a further appropriate image blur correction can be performed based on a state where a camera shake is detected, and more particularly, an image blur generated due to a needless image blur correcting operation based on the inappropriate detection of the camera shake can be controlled.

According to an embodiment of the present invention, a further appropriate and high-accuracy image blur correcting operation based on changes of a state of the camera shake can be performed. More particularly, even if it is inappropriately determined that the image blur correction is required, inappropriate inoperation can be effectively prevented.

**Claims**

1. An image blur correcting device for use in an imaging apparatus comprising:

   a detector (39) configured to detect a shake amount of the imaging apparatus; a moving unit (35, 36, 37, 38) configured to move an imaging plane based on the shake amount detected by the detector;
   a first determining unit (60) configured to determine whether or not the shake amount detected by the detector is less than a first threshold value; and
   a correction controller (60) configured to control the moving unit not to move the imaging plane when it is determined that the shake amount detected by the detector is less than the first threshold value by the first determining unit; **characterised in that**
   the correction, controller has a decreasing unit (60) configured to decrease the first threshold value if a predetermined condition indicating a change of state of the camera shake is met.

2. An image blur correcting device according to claim 1, further comprising a second determining unit (60) configured to determine whether or not the shake amount detected by the detector is equal to or larger than a second threshold value, and wherein
   the predetermined condition is that it is determined that the shake amount detected by the detector is equal to or larger than the second threshold value by the second determining unit.

3. An image blur correcting device according to claim 2, further comprising
   a first counter (60) configured to count a first counting number which is obtained by counting up a continuous number of times when the second determining unit determines that the shake amount is equal to or larger than the second threshold value, and wherein
   the predetermined condition in that the first counting number becomes a first threshold counting number or more.

4. An image blur correcting device according to claim 3, **characterized in that** a term for which the first counter counts the first counting number with respect to the first threshold counting number and a term for which the second counter counts the second counting number with respect to the second threshold counting number are shorter than a term for which the moving unit moves the imaging plane.

5. An image blur correcting device according to claim 1, 2 or 3 further comprising:

   a shake direction determining unit (60) configured to determine a shake direction based on a result obtained by periodically detecting the shake amount through the detector; and
   a second counter (60) configured to count a second counting number which is obtained by counting up a continuous number of times when the shake direction determined by the shake direction determining unit is a same direction, and wherein
   the predetermined condition is that the second counting number becomes a second threshold counting number or more.

6. An image blur correcting device according to claim 1, further comprising:

   a second determining unit (60) configured to determine whether or not each of the shake amounts periodically detected by the detector is equal to or larger than a second threshold value;
   a first counter (60) configured to count a first counting number which is obtained by counting up a continuous number of times when the second determining unit determines that each of the shake amounts is equal to or larger than the second threshold value;
   a shake direction determining unit (60) configured to determine a shake direction based on a result obtained by periodically detecting the shake amount through the detector; and
   a second counter (60) configured to count a second counting number which is obtained by counting up a continuous number of times when the shake direction determined by the shake direction determining unit is a same direction, and wherein
   the predetermined condition is that the first counting number becomes a first threshold counting number or more and the second counting number becomes a second threshold counting number or more.

7. An image blur correcting device according to claim 3, 5 or 6 wherein the or a counter has a first synchronising unit (60) configured to perform a counting in synchronization with periodic detection of the detector.

8. An image blur correcting device according to any one of the preceding claims, wherein the correction controller has a second synchronizing unit (60) configured to perform a determination whether or not the first threshold value is to be decreased in synchronization with a periodic detection of the detector.

9. An image blur correcting method in an imaging apparatus, comprising the steps of:

detecting a shake amount of the imaging apparatus;
moving an imaging plane based on the shake amount detected in the detecting step;
determining whether or not the shake amount detected in the detecting step is less than a first threshold value; and
controlling the imaging plane not to be moved in the moving step when it is determined that the shake amount detected in the detecting step is less than the first threshold value in the first determining step; **characterised by**:

decreasing the first threshold value if a predetermined condition indicating a change of state of the camera shake is met.

10. An image blur correcting method according to claim 9, further comprising the step of determining whether or not the shake amount detected in the detecting step is equal to or larger than a second threshold value, and wherein the predetermined condition is that it is determined that the shake amount detected in the detecting step is equal to or larger than the second threshold value in the second determining step.

11. An image blur correcting method according to claim 10, further comprising a step of counting a first counting number which is obtained by counting up a continuous number of times when it is determined that the shake amount is equal to or larger than the second threshold value in the second determining step, and wherein the predetermined condition is that the first counting number becomes a first threshold counting number or more.

12. The image blur correcting method according to claim 9, 10 or 11 further comprising the steps of:

determining a shake direction based on a result obtained by periodically detecting the shake amount in the detecting step: and
counting a second counting number which is obtained by counting up a continuous number of times when the shake direction determined in the shake direction determining step is a same direction, and wherein the predetermined condition is that the second counting number becomes a second threshold counting number or more.

13. An image blur correcting method according to claim 12, wherein a term for which the first counting number is counted with respect to the first threshold counting number in the first counting step and a term tor which the second counting number is counted with respect to the second threshold counting number in the second counting step are shorter than a term for which the imaging plane is moved in the moving step.

14. An image blur correcting method according to claim 9, further comprising the steps of:

determining whether or not each of the shake amounts periodically detected in the detecting step is equal to or larger than a second threshold value;
counting a first counting number which is obtained by counting up a continuous number of times when it is determined that each or the shake amounts is equal to or larger than the second threshold value in the second determining step; determining a shake direction based on a result obtained by periodically detecting the shake amount in the detecting step; and
counting a second counting number which is obtained by counting up a continuous number of times when the shake direction determined in the shake direction determining step is a same direction, and wherein the predetermined condition is that the first counting number becomes a first threshold counting number or more and the second counting number becomes a second threshold counting number or more.

15. The image blur correcting method according to claim 11, 12 or 14 wherein the or a counting step is performed in synchronization with a periodic detection in the detection step.

16. An image blur correcting method according to any one of claims 9 to 15, wherein the controlling step has a step of performing a determination whether or not the first threshold value is to be decreased in synchronization with a periodic detection in the detecting step.

**17.** A computer program comprising program code means that, when executed by a control system of an imaging apparatus, instruct the imaging apparatus to perform an image blur correcting method according to any one of claims 9 to 16.

**Patentansprüche**

**1.** Bildunschärfe-Korrekturvorrichtung zur Verwendung in einer Abbildungsvorrichtung, wobei die Bildunschärfe-Korrekturvorrichtung umfasst:

einen Detektor (39), der dafür konfiguriert ist, einen Wackelbetrag der Abbildungsvorrichtung zu erfassen;
eine Bewegungseinheit (35, 36, 37, 38), die dafür konfiguriert ist, eine Abbildungsebene auf der Grundlage des durch den Detektor erfassten Wackelbetrags zu bewegen;
eine erste Bestimmungseinheit (60), die dafür konfiguriert ist zu bestimmen, ob der durch den Detektor erfasste Wackelbetrag kleiner als ein erster Schwellenwert ist; und
eine Korrektursteuereinheit (60), die dafür konfiguriert ist, die Bewegungseinheit in der Weise zu steuern, dass sie die Abbildungsebene nicht bewegt, wenn durch die erste Bestimmungseinheit bestimmt wird, dass der durch den Detektor erfasste Wackelbetrag kleiner als der erste Schwellenwert ist;

**dadurch gekennzeichnet, dass**
die Korrektursteuereinheit eine Verringerungseinheit (60) aufweist, die dafür konfiguriert ist, den ersten Schwellenwert zu verringern, falls eine vorgegebene Bedingung erfüllt ist, die eine Änderung des Zustands des Kamerawackelns angibt.

**2.** Bildunschärfe-Korrekturvorrichtung nach Anspruch 1, die ferner eine zweite Bestimmungseinheit (60) umfasst, die dafür konfiguriert ist zu bestimmen, ob der durch den Detektor erfasste Wackelbetrag gleich oder größer einem zweiten Schwellenwert ist, und wobei
die vorgegebene Bedingung ist, dass durch die zweite Bestimmungseinheit bestimmt wird, dass der durch den Detektor erfasste Wackelbetrag gleich oder größer dem zweiten Schwellenwert ist.

**3.** Bildunschärfe-Korrekturvorrichtung nach Anspruch 2, die ferner umfasst:

einen ersten Zähler (60), der dafür konfiguriert ist, eine erste Zählzahl zu zählen, die **dadurch** erhalten wird, dass eine ununterbrochene Anzahl, wann die zweite Bestimmungseinheit bestimmt, dass der Wackelbetrag gleich oder größer dem zweiten Schwellenwert ist, vorwärts gezählt wird, und wobei
die vorgegebene Bedingung ist, dass die erste Zählzahl gleich einer ersten Schwellenzählzahl oder mehr wird.

**4.** Bildunschärfe-Korrekturvorrichtung nach Anspruch 3, **dadurch gekennzeichnet, dass** eine Zeitdauer, für die der erste Zähler die erste Zählzahl in Bezug auf die erste Schwellenzählzahl zählt, und eine Zeitdauer, für die der zweite Zähler die zweite Zählzahl in Bezug auf die zweite Schwellenzählzahl zählt, kürzer als eine Zeitdauer sind, für die die Bewegungseinheit die Abbildungsebene bewegt.

**5.** Bildunschärfe-Korrekturvorrichtung nach Anspruch 1, 2 oder 3, die ferner umfasst:

eine Wackelrichtungs-Bestimmungseinheit (60), die dafür konfiguriert ist, auf der Grundlage eines Ergebnisses, das durch periodisches Erfassen des Wackelbetrags durch den Detektor erhalten wird, eine Wackelrichtung zu bestimmen; und
einen zweiten Zähler (60), der dafür konfiguriert ist, eine zweite Zählzahl zu zählen, die durch Vorwärtszählen einer ununterbrochenen Anzahl, wann die durch die Wackelrichtungs-Bestimmungseinheit bestimmte Wackelrichtung eine selbe Richtung ist, erhalten wird, und wobei
die vorgegebene Bedingung ist, dass die zweite Zählzahl eine zweite Schwellenzählzahl oder mehr wird.

**6.** Bildunschärfe-Korrekturvorrichtung nach Anspruch 1, die ferner umfasst:

eine zweite Bestimmungseinheit (60), die dafür konfiguriert ist zu bestimmen, ob jeder der durch den Detektor periodisch erfassten Wackelbeträge gleich oder größer einem zweiten Schwellenwert ist;
einen ersten Zähler (60), der dafür konfiguriert ist, eine erste Zählzahl zu zählen, die **dadurch** erhalten wird, dass eine ununterbrochene Anzahl, wann die zweite Bestimmungseinheit bestimmt, dass jeder der Wackelbeträge gleich oder größer dem zweiten Schwellenwert ist, vorwärts gezählt wird;
eine Wackelrichtungs-Bestimmungseinheit (60), die dafür konfiguriert ist, auf der Grundlage eines durch periodisches Erfassen des Wackelbetrags durch den Detektor erhaltenen Ergebnisses eine Wackelrichtung zu bestimmen; und
einen zweiten Zähler (60), der dafür konfiguriert ist, eine zweite Zählzahlzu zählen, die **dadurch** erhalten wird, dass eine ununterbrochene Anzahl, wann die durch die Wackelrichtungs-Bestimmungseinheit bestimmte Wakkelrichtung eine selbe Richtung ist, vorwärts gezählt wird, und wobei
die vorgegebene Bedingung ist, dass die erste Zählzahl eine erste Schwellenzählzahl oder mehr wird und dass die zweite Zählzahl eine zweite Schwellenzählzahl oder mehr wird.

7. Bildunschärfe-Korrekturvorrichtung nach Anspruch 3, 5 oder 6, wobeider oder ein Zähler eine erste Synchronisiereinheit (60) aufweist, die dafür konfiguriert ist, eine Zählung synchron zur periodischen Erfassung des Detektors auszuführen.

8. Bildunschärfe-Korrekturvorrichtung nach einem der vorhergehenden Ansprüche, wobei die Korrektursteuereinheit eine zweite Synchronisiereinheit (60) aufweist, die dafür konfiguriert ist, eine Bestimmung auszuführen, ob der erste Schwellenwert synchron zu einer periodischen Erfassung des Detektors verringert werden soll.

9. Bildunschärfe-Korrekturverfahren in einer Abbildungsvorrichtung, wobei das Verfahren die folgenden Schritte umfasst:

   Erfassen eines Wackelbetrags der Abbildungsvorrichtung;
   Bewegen einer Abbildungsebene auf der Grundlage des in dem Erfassungsschritt erfassten Wackelbetrags;
   Bestimmen, ob der in dem Erfassungsschritt erfasste Wackelbetrag kleiner als ein erster Schwellenwert ist; und
   Steuern derAbbildungsebene in der Weise, dass sie in dem Bewegungsschritt nicht bewegt wird, wenn in dem ersten Bestimmungsschritt bestimmt wird, dass der in dem Erfassungsschritt erfasste Wackelbetrag kleiner als der erste Schwellenwert ist; **gekennzeichnet durch**
   Verringern des ersten Schwellenwerts, falls eine vorgegebene Bedingung erfüllt ist, die eine Änderung des Zustands des Kamerawackelns angibt.

10. Bildunschärfe-Korrekturverfahren nach Anspruch 9, das ferner den Schritt des Bestimmens umfasst, ob der in dem Erfassungsschritt erfasste Wackelbetrag gleich oder größer einem zweiten Schwellenwert ist, und wobei
die vorgegebene Bedingung ist, dass bestimmt wird, dass der in dem Erfassungsschritt erfasste Wackelbetrag gleich oder größer demzweiten Schwellenwert in dem zweiten Bestimmungsschrittist.

11. Bildunschärfe-Korrekturverfahren nach Anspruch 10, das ferner einen Schritt des Zählens einer ersten Zählzahlumfasst, die **dadurch** erhalten wird, dass eine ununterbrochene Anzahl, wann in dem zweiten Bestimmungsschritt bestimmt wird, dass der Wackelbetrag gleich oder größer dem zweiten Schwellenwert ist, vorwärts gezählt wird, und wobei
die vorgegebene Bedingung ist, dass die erste Zählzahl eine erste Schwellenzählzahl oder mehr wird.

12. Bildunschärfe-Korrekturverfahren nach Anspruch 9, 10 oder 11, das ferner die folgenden Schritte umfasst:

   Bestimmen einer Wackelrichtung auf der Grundlage eines Ergebnisses, das **dadurch** erhalten wird, dass in dem Erfassungsschritt periodisch der Wackelbetrag erfasst wird; und
   Zählen einer zweiten Zählzahl, die **dadurch** erhalten wird, dass eine ununterbrochene Anzahl, wann die in dem Wackelrichtungs-Bestimmungsschritt bestimmte Wackelrichtung eine selbe Richtung ist, vorwärts gezählt wird, und wobei
   die vorgegebene Bedingung ist, dass die zweite Zählzahl eine zweite Schwellenzählzahl oder mehr wird.

13. Bildunschärfe-Korrekturverfahren nach Anspruch 12, wobei eine Zeitdauer, für die eine erste Zählzahl in Bezug auf die erste Schwellenzählzahl in dem ersten Zählschritt gezählt wird, und eine Zeitdauer, für die die zweite Zählzahl in Bezug auf die zweite Schwellenzählzahl in dem zweiten Zählschritt gezählt wird, kürzer als eine Zeitdauer sind, für die die Abbildungsebenein dem Bewegungsschritt bewegt wird.

14. Bildunschärfe-Korrekturverfahren nach Anspruch 9, das ferner die folgenden Schritte umfasst:

   Bestimmen, ob jeder der in dem Erfassungsschritt periodisch erfassten Wackelbeträge gleich oder größer einem zweiten Schwellenwert ist;

Zählen einer ersten Zählzahl, die **dadurch** erhalten wird, dass eine ununterbrochene Anzahl, wann in dem zweiten Bestimmungsschritt bestimmt wird, dass jeder der Wackelbeträge gleich oder größer dem zweiten Schwellenwert ist, vorwärts gezählt wird;

Bestimmen einer Wackelrichtung auf der Grundlage eines durch periodisches Erfassen des Wackelbetrags in dem Erfassungsschritt erhaltenen Ergebnisses; und

Zählen einer zweiten Zählzahl, die durch Vorwärtszählen einer ununterbrochenen Anzahl, wann die in dem Wackelrichtungs-Bestimmungsschritt bestimmte Wackelrichtung eine selbe Richtung ist, erhalten wird, und wobei

die vorgegebene Bedingung ist, dass die erste Zählzahl eine erste Schwellenzählzahl oder mehr wird und dass die zweite Zählzahl eine zweite Schwellenzählzahl oder mehr wird.

15. Bildunschärfe-Korrekturverfahren nach Anspruch 11, 12 oder 14, wobei der oder ein Zählschritt synchron mit einer periodischen Erfassung in dem Erfassungsschritt ausgeführt wird.

16. Bildunschärfe-Korrekturverfahren nach einem der Ansprüche 9 bis 15, wobei der Steuerschritt einen Schritt des Ausführens einer Bestimmung enthält, ob der erste Schwellenwert synchron zu einer periodischen Erfassung in dem Erfassungsschritt verringert werden soll.

17. Computerprogramm, das ein Programmcodemittel umfasst, das, wenn es durch ein Steuersystem einer Abbildungsvorrichtung ausgeführt wird, die Abbildungsvorrichtung anweist, ein Bildunschärfe-Korrekturverfahren nach einem der Ansprüche 9 bis 16 auszuführen.

**Revendications**

1. Dispositif de correction de flou d'image destiné à être utilisé dans un appareil de formation d'image comprenant :

un détecteur (39) configuré pour détecter une quantité de tremblement de l'appareil de formation d'image ;

une unité de déplacement (35, 36, 37, 38) configurée pour déplacer un plan de formation d'image sur la base de la quantité de tremblement détectée par le détecteur ;

une première unité de détermination (60) configurée pour déterminer si, oui ou non, la quantité de tremblement détectée par le détecteur est inférieure à une première valeur de seuil ; et

un dispositif de commande de correction (60) configuré pour commander l'unité de déplacement pour ne pas déplacer le plan de formation d'image lorsqu'il est déterminé, par la première unité de détermination, que la quantité de tremblement détectée par le détecteur est inférieure à la première valeur de seuil

**caractérisé en ce que** ;

le dispositif de commande de correction comporte une unité de diminution (60) configurée pour diminuer la première valeur de seuil si une condition prédéterminée indiquant un changement d'état du tremblement de l'appareil photographique est satisfaite.

2. Dispositif de correction de flou d'image selon la revendication 1, comprenant en outre une deuxième unité de détermination (60) configurée pour déterminer si, oui ou non, la quantité de tremblement détectée par le détecteur est égale ou supérieure à une deuxième valeur de seuil, et dans lequel

la condition prédéterminée est qu'il est déterminé, par la deuxième unité de détermination, que la quantité de tremblement détectée par le détecteur est égale ou supérieure à la deuxième valeur de seuil.

3. Dispositif de correction de flou d'image selon la revendication 2, comprenant en outre :

un premier compteur (60) configuré pour compter un premier nombre de comptage qui est obtenu en comptant un nombre continu de fois lorsque la deuxième unité de détermination détermine que la quantité de tremblement est égale ou supérieure à la deuxième valeur de seuil, et dans lequel

la condition prédéterminée est que le premier nombre de comptage devient un premier nombre de comptage de seuil ou plus.

4. Dispositif de correction de flou d'image selon la revendication 3, **caractérisé en ce qu'**une période pendant laquelle le premier compteur compte le premier nombre de comptage par rapport au premier nombre de comptage de seuil et une période pendant laquelle le deuxième compteur compte le deuxième nombre de comptage par rapport au deuxième nombre de comptage de seuil sont plus courtes qu'une période pendant laquelle l'unité de déplacement déplace le plan de formation d'image.

**5.** Dispositif de correction de flou d'image selon la revendication 1, 2 ou 3, comprenant en outre :

une unité de détermination de direction de tremblement (60) configurée pour déterminer une direction de tremblement sur la base d'un résultat obtenu en détectant périodiquement, par le détecteur, la quantité de tremblement ; et

un deuxième compteur (60) configuré pour compter un deuxième nombre de comptage qui est obtenu en comptant un nombre continu de fois lorsque la direction de tremblement déterminée par l'unité de détermination de direction de tremblement est une même direction, et dans lequel

la condition prédéterminée est que le deuxième nombre de comptage devient un deuxième nombre de comptage de seuil ou plus.

**6.** Dispositif de correction de flou d'image selon la revendication 1, comprenant en outre :

une deuxième unité de détermination (60) configurée pour déterminer si, oui ou non, chacune des quantités de tremblement détectées périodiquement par le détecteur est égale ou supérieure à une deuxième valeur de seuil ;

un premier compteur (60) configuré pour compter un premier nombre de comptage qui est obtenu en comptant un nombre continu de fois lorsque la deuxième unité de détermination détermine que chacune des quantités de tremblement est égale ou supérieure à la deuxième valeur de seuil ;

une unité de détermination de direction de tremblement (60) configurée pour déterminer une direction de tremblement sur la base d'un résultat obtenu en détectant périodiquement, par le détecteur, la quantité de tremblement ; et

un deuxième compteur (60) configuré pour compter un deuxième nombre de comptage qui est obtenu en comptant un nombre continu de fois lorsque la direction de tremblement déterminée par l'unité de détermination de direction de tremblement est une même direction, et dans lequel

la condition prédéterminée est que le premier nombre de comptage devient un premier nombre de comptage de seuil ou plus et que le deuxième nombre de comptage devient un deuxième nombre de comptage de seuil ou plus.

**7.** Dispositif de correction de flou d'image selon la revendication 3, 5 ou 6, dans lequel le ou un compteur comporte une première unité de synchronisation (60) configurée pour effectuer un comptage en synchronisation avec la détection périodique du détecteur.

**8.** Dispositif de correction de flou d'image selon l'une quelconque des revendications précédentes, dans lequel le dispositif de commande de correction comporte une deuxième unité de synchronisation (60) configurée pour déterminer si, oui ou non, la première valeur de seuil doit être diminuée en synchronisation avec une détection périodique du détecteur.

**9.** Procédé de correction de flou d'image dans un appareil de formation d'image, comprenant les étapes consistant à :

détecter une quantité de tremblement de l'appareil de formation d'image ;

déplacer un plan de formation d'image sur la base de la quantité de tremblement détectée à l'étape de détection ;

déterminer si, oui ou non, la quantité de tremblement détectée à l'étape de détection est inférieure à une première valeur de seuil ; et

commander le plan de formation d'image pour qu'il ne soit pas déplacé à l'étape de déplacement lorsqu'il est déterminé que la quantité de tremblement détectée à l'étape de détection est inférieure à la première valeur de seuil à la première étape de détermination ; **caractérisé par** :

la diminution de la première valeur de seuil si une condition prédéterminée indiquant un changement d'état du tremblement de l'appareil photographique est satisfaite.

**10.** Procédé de correction de flou d'image selon la revendication 9, comprenant en outre l'étape consistant à déterminer si, oui ou non, la quantité de tremblement détectée à l'étape de détection est égale ou supérieure à une deuxième valeur de seuil, et dans lequel

la condition prédéterminée est qu'il est déterminé que la quantité de tremblement détectée à l'étape de détection est égale ou supérieure à la deuxième valeur de seuil à la deuxième étape de détermination.

11. Procédé de correction de flou d'image selon la revendication 10, comprenant en outre une étape de comptage d'un premier nombre de comptage qui est obtenu en comptant un nombre continu de fois lorsqu'il est déterminé que la quantité de tremblement est égale ou supérieure à la deuxième valeur de seuil à la deuxième étape de détermination, et dans lequel
la condition prédéterminée est que le premier nombre de comptage devient un premier nombre de comptage de seuil ou plus.

12. Procédé de correction de flou d'image selon la revendication 9, 10 ou 11, comprenant en outre les étapes consistant à :

déterminer une direction de tremblement sur la base d'un résultat obtenu en détectant périodiquement la quantité de tremblement à l'étape de détection ; et
compter un deuxième nombre de comptage qui est obtenu en comptant un nombre continu de fois lorsque la direction de tremblement déterminée à l'étape de détermination de direction de tremblement est une même direction, et dans lequel
la condition prédéterminée est que le deuxième nombre de comptage devient un deuxième nombre de comptage de seuil ou plus.

13. Procédé de correction de flou d'image selon la revendication 12, dans lequel une période pendant laquelle le premier nombre de comptage est compté par rapport au premier nombre de comptage de seuil à la première étape de comptage et une période pendant laquelle le deuxième nombre de comptage est compté par rapport au deuxième nombre de comptage de seuil à la deuxième étape de comptage sont plus courtes qu'une période pendant laquelle le plan de formation d'image est déplacé à l'étape de déplacement.

14. Procédé de correction de flou d'image selon la revendication 9, comprenant en outre les étapes consistant à :

déterminer si, oui ou non, chacune des quantités de tremblement détectées périodiquement à l'étape de détection est égale ou supérieure à une deuxième valeur de seuil ;
compter un premier nombre de comptage qui est obtenu en comptant un nombre continu de fois lorsqu'il est déterminé que chacune des quantités de tremblement est égale ou supérieure à la deuxième valeur de seuil à la deuxième étape de détermination ;
déterminer une direction de tremblement sur la base d'un résultat obtenu en détectant périodiquement la quantité de tremblement à l'étape de détection ; et
compter un deuxième nombre de comptage qui est obtenu en comptant un nombre continu de fois lorsque la direction de tremblement déterminée à l'étape de détermination de direction de tremblement est une même direction, et dans lequel
la condition prédéterminée est que le premier nombre de comptage devient un premier nombre de comptage de seuil ou plus et que le deuxième nombre de comptage devient un deuxième nombre de comptage de seuil ou plus.

15. Procédé de correction de flou d'image selon la revendication 11, 12 ou 14, dans lequel la ou une étape de comptage est effectuée en synchronisation avec une détection périodique à l'étape de détection.

16. Procédé de correction de flou d'image selon l'une quelconque des revendications 9 à 15, dans lequel l'étape de commande comporte une étape consistant à déterminer si, oui ou non, la première valeur de seuil doit être diminuée en synchronisation avec une détection périodique à l'étape de détection.

17. Programme d'ordinateur comprenant des moyens formant code de programme qui, lorsqu'il est exécuté par un système de commande d'un appareil de formation d'image, donne des instructions à l'appareil de formation d'image pour effectuer un procédé de correction de flou d'image selon l'une quelconque des revendications 9 à 16.

# FIG. 1

# FIG. 2

# FIG. 3

# FIG. 4

EP 1 980 904 B1

# FIG. 5

VERTICAL DRIVING (VD) SYNCHRONIZATION SIGNAL

RELEASE ON

EXPOSURE TIME FOR RECORDING

SETTING FOR TRANSFERRING STILL IMAGE

IMAGE BLUR CORRECTING OPERATION

MONITORING

CCD AF

EXPOSURE TIME OR STILL IMAGE

DATA TRANSFER OF STILL IMAGE

IMAGE BLUR CORRECTING OPERATION ON

IMAGE BLUR CORRECTING OPERATION ON

IMAGE BLUR CORRECTING OPERATION OFF

MECHANICAL SHUTTER

SHUTTER CLOSE

EXPOSURE TIMING

ELECTRONIC SHUTTER

EXPOSURE TIME FOR RECORDING

EP 1 980 904 B1

# FIG. 6

FIG. 7A  FIG. 7B  FIG. 7C

# FIG. 8A

# FIG. 8B

# FIG. 8C

# FIG. 9

Δx

θ

FOCAL LENGTH ($\mu$ m)

FIG. 10A

| 35MM FOCAL LENGTH | 28 | 135 | 200 |
|---|---|---|---|
| REAL FOCAL LENGTH | 4.7 | 22.6 | 33.5 |

FIG. 10B

| SHAKE ANGLE AND MOVEMENT AMOUNT | CORRECTION AMOUNT | | |
|---|---|---|---|
| SHAKE ANGLE (mrad) | 28 | 135 | 200 |
| 0 | 0 | 0 | 0 |
| 0.5 | 2 | 11 | 17 |
| 1 | 5 | 23 | 34 |
| 1.5 | 7 | 34 | 50 |
| 2 | 9 | 45 | 67 |
| 2.5 | 12 | 57 | 84 |
| 3 | 14 | 68 | 101 |
| 3.5 | 16 | 79 | 117 |
| 4 | 19 | 91 | 134 |
| 4.5 | 21 | 102 | 151 |
| 5 | 23 | 113 | 168 |
| 5.5 | 26 | 125 | 184 |
| 6 | 28 | 136 | 201 |
| 6.5 | 31 | 147 | 218 |
| 7 | 33 | 158 | 235 |
| 7.5 | 35 | 170 | 252 |
| 8 | 38 | 181 | 268 |
| 8.5 | 40 | 192 | 285 |
| 9 | 42 | 204 | 302 |
| 9.5 | 45 | 215 | 319 |
| 10 | 47 | 228 | 335 |
| 10.5 | 49 | 238 | 352 |
| 11 | 52 | 249 | 369 |
| 11.5 | 54 | 260 | 386 |
| 12 | 56 | 272 | 403 |
| 12.5 | 59 | 283 | 419 |
| 13 | 61 | 294 | 436 |
| 13.5 | 63 | 306 | 453 |
| 14 | 65 | 317 | 470 |
| 14.5 | 68 | 328 | 486 |
| 15 | 70 | 340 | 503 |
| 15.5 | 73 | 351 | 520 |
| 16 | 75 | 362 | 537 |
| 16.5 | 77 | 374 | 554 |
| 17 | 80 | 385 | 570 |
| 17.5 | 82 | 396 | 587 |
| 18 | 85 | 408 | 604 |
| 18.5 | 87 | 419 | 621 |
| 19 | 89 | 430 | 637 |
| 19.5 | 92 | 442 | 654 |
| 20 | 94 | 453 | 671 |
| 20.5 | 96 | 464 | 688 |
| 21 | 99 | 476 | 704 |
| 21.5 | 101 | 487 | 721 |
| 22 | 103 | 498 | 738 |
| 22.5 | 106 | 510 | 755 |
| 23 | 108 | 521 | 772 |
| 23.5 | 110 | 532 | 788 |
| 24 | 113 | 543 | 805 |
| 24.5 | 115 | 555 | 822 |
| 25 | 117 | 566 | 838 |

# FIG. 11

# FIG. 12

TERM FOR CORRECTING OPERATION

0.1ms     0.1ms     0.1ms     0.1ms     0.1ms

0.25ms     0.25ms     0.25ms     0.25ms     0.25ms

# FIG. 13

GYRO OUTPUT

MOVEMENT AMOUNT

0.25 MS CYCLE

# FIG. 14A

GYRO OUTPUT

+Th1

−Th1

# FIG. 14B

MOVEMENT AMOUNT
(MASKING IS NOT
PERFORMED)

IMAGE BLUR AMOUNT

# FIG. 14C

MOVEMENT AMOUNT
(MASKING IS NOT
PERFORMED)

# FIG. 15

```
        ┌─────────────────┐
        │   IMAGE BLUR     │
        │   CORRECTION     │
        │   IS STARTED     │
        └─────────────────┘
                 │
                 ▼
    ┌─────────────────────────┐  S11
    │  DETECT ANGULAR VELOCITY │
    │      OF GYRO SENSOR      │
    └─────────────────────────┘
                 │
                 ▼
              ╱─────╲  S12
         ╱─────────────╲      NO
        │  GYRO OUTPUT  │──────────┐
        │ IS LESS THAN Th1?│        │
         ╲─────────────╱           │
              ╲─────╱              │
                 │ YES             │
                 ▼                 │
    ┌─────────────────────────┐ S13│
    │ GYRO OUTPUT IS SET TO ZERO│   │
    └─────────────────────────┘    │
                 │                 │
                 ◄─────────────────┘
                 ▼
    ┌─────────────────────────┐  S14
    │    CALCULATE MOVEMENT    │
    │         AMOUNT           │
    └─────────────────────────┘
                 │
                 ▼
    ┌─────────────────────────┐  S15
    │        DRIVE COILS       │
    └─────────────────────────┘
                 │
                 ▼
              ╱─────╲  S16
         ╱─────────────╲      NO
        │   EXPOSURE    │──────────┐
        │ IS COMPLETED? │          │
         ╲─────────────╱           │
              ╲─────╱              │
                 │ YES             │
                 ▼                 │
        ┌─────────────────┐        │
        │   IMAGE BLUR     │       │
        │  CORRECTION IS   │       │
        │   COMPLETED      │       │
        └─────────────────┘
```

# FIG. 16A

GYRO OUTPUT
(ANGULAR VELOCITY)

+Th1

-Th1

# FIG. 16B

ANGULAR VELOCITY
AFTER MASKING IS
PERFORMED

+Th1

-Th1

# FIG. 16C

REAL MOVEMENT AMOUNT
OF IMAGING SURFACE

MOVEMENT AMOUNT

CORRECTION
AMOUNT

## FIG. 17A

GYRO OUTPUT
(ANGULAR VELOCITY)

+Th1

−Th1

## FIG. 17B

ANGULAR VELOCITY
AFTER MASKING IS
PERFORMED

+Th1

−Th1

## FIG. 17C

REAL MOVEMENT AMOUNT
OF IMAGING SURFACE

MOVEMENT AMOUNT

CORRECTION
AMOUNT

## FIG. 18A

GYRO OUTPUT
(ANGULAR VELOCITY)

+Th2
+Th1
−Th1
−Th2

## FIG. 18B

GYRO OUTPUTS ARE
Th2 OR MORE IN
THREE CONTINUOUS
SAMPLINGS

2  3
1      4

ANGULAR VELOCITY
AFTER MASKING IS
PERFORMED

+Th2
+Th1
−Th1
−Th2

## FIG. 18C

REAL MOVEMENT AMOUNT
OF IMAGING SURFACE

MOVEMENT AMOUNT

CORRECTION
AMOUNT

# FIG. 19A

GYRO OUTPUT
(ANGULAR VELOCITY)

+Th2
+Th1
-Th1
-Th2

# FIG. 19B

GYRO OUTPUTS ARE Th2 OR MORE IN
FOUR CONTINUOUS SAMPLINGS

ANGULAR VELOCITY
AFTER MASKING IS
PERFORMED

+Th2
+Th1
-Th1
-Th2

# FIG. 19C

REAL MOVEMENT AMOUNT
OF IMAGING SURFACE

MOVEMENT AMOUNT

CORRECTION
AMOUNT

# FIG. 20A

FLOWCHART OF IMAGE BLUR CORRECTION

```
        ┌─────────────────┐
        │   IMAGE BLUR    │
        │   CORRECTION    │
        │   IS STARTED    │
        └────────┬────────┘
                 │
                 ▼
        ┌─────────────────┐  S21
        │ DETECT ANGULAR VELOCITY │
        │   OF GYRO SENSOR │
        └────────┬────────┘
                 │
                 ▼
        ┌─────────────────┐  S22
        │    SUBROUTINE   │
        │ FOR CORRECTING Th1 │
        └────────┬────────┘
                 │
                 ▼
            ╱ S23  ╲          NO
        ╱  GYRO OUTPUT  ╲ ───────►
        ╲ IS LESS THAN Th1? ╱
            ╲        ╱
             │ YES
             ▼
        ┌─────────────────┐  S24
        │ GYRO OUTPUT IS SET TO ZERO │
        └────────┬────────┘
                 │
                 ▼
        ┌─────────────────┐  S25
        │ CALCULATE MOVEMENT │
        │     AMOUNT      │
        └────────┬────────┘
                 │
                 ▼
        ┌─────────────────┐  S26
        │   DRIVE COILS   │
        └────────┬────────┘
                 │
                 ▼
            ╱ S27  ╲          NO
        ╱   EXPOSURE    ╲ ───────►
        ╲ IS COMPLETED? ╱
            ╲        ╱
             │ YES
             ▼
        ┌─────────────────┐
        │   IMAGE BLUR    │
        │ CORRECTION IS   │
        │   COMPLETED     │
        └─────────────────┘
```

# FIG. 20B

```
        ┌──────────────────┐
        │  SUBROUTINE FOR  │
        │ CORRECTING Th1 IS│
        │     STARTED      │
        └──────────────────┘
                 │
                 ▼
              ╱╲  S31
            ╱      ╲
          ╱ ANGULAR  ╲
        ╱ VELOCITY IS  ╲   NO
       ╱ EQUAL TO OR MORE╲──────────────────┐
        ╲   THAN Th2?   ╱                    │
          ╲          ╱                       │
            ╲      ╱                         │
              ╲╱                             │
               │ YES                         ▼
    ┌──────────────────────┐      ┌──────────────────────┐
    │  SHAKE COUNTER +1    │ S32  │  RESET SHAKE COUNTER │ S33
    └──────────────────────┘      └──────────────────────┘
               │                             │
               ▼◄────────────────────────────┘
              ╱╲  S34
            ╱      ╲
          ╱  SHAKE   ╲
        ╱  COUNTER     ╲   NO
       ╱ IS EQUAL TO OR ╲──────────────────┐
        ╲ MORE THAN "4"?╱                   │
          ╲          ╱                       │
            ╲      ╱                         │
              ╲╱                             │
               │ YES                         │
    ┌──────────────────────┐ S35             │
    │ CHANGE Th1 TO BE     │                 │
    │ LOWER NUMBER         │                 │
    └──────────────────────┘                 │
               │◄────────────────────────────┘
               ▼
        ┌──────────────────┐
        │  SUBROUTINE FOR  │
        │ CORRECTING Th1 IS│
        │    COMPLETED     │
        └──────────────────┘
```

# FIG. 21A

FLOWCHART OF IMAGE BLUR CORRECTION

```
        ┌──────────────────────┐
        │     IMAGE BLUR        │
        │    CORRECTION         │
        │    IS STARTED         │
        └──────────────────────┘
                   │
                   ▼ ◄──────────────────────────┐
        ┌──────────────────────┐  S41           │
        │ DETECT ANGULAR VELOCITY│               │
        │    OF GYRO SENSOR     │                │
        └──────────────────────┘                │
                   │                            │
                   ▼                            │
        ┌──────────────────────┐  S42           │
        │     SUBROUTINE        │               │
        │   FOR CORRECTING Th1  │               │
        └──────────────────────┘                │
                   │                            │
                   ▼        S43                 │
              ╱─────────────╲      NO           │
             ╱  GYRO OUTPUT   ╲───────┐         │
             ╲ IS LESS THAN Th1?╱     │         │
              ╲─────────────╱         │         │
                   │ YES              │         │
                   ▼                  │         │
        ┌──────────────────────┐  S44 │         │
        │ GYRO OUTPUT IS SET TO ZERO│  │        │
        └──────────────────────┘     │         │
                   │ ◄────────────────┘         │
                   ▼                            │
        ┌──────────────────────┐  S45           │
        │ CALCULATE MOVEMENT    │               │
        │      AMOUNT           │                │
        └──────────────────────┘                │
                   │                            │
                   ▼                            │
        ┌──────────────────────┐  S46           │
        │     DRIVE COILS       │               │
        └──────────────────────┘                │
                   │        S47                 │
                   ▼                            │
              ╱─────────────╲      NO           │
             ╱   EXPOSURE     ╲──────────────────┘
             ╲ IS COMPLETED?  ╱
              ╲─────────────╱
                   │ YES
                   ▼
        ┌──────────────────────┐
        │     IMAGE BLUR        │
        │   CORRECTION IS       │
        │    COMPLETED          │
        └──────────────────────┘
```

# FIG. 21B

```
         ┌─────────────────┐
         │  SUBROUTINE FOR │
         │ CORRECTING Th1 IS│
         │     STARTED     │
         └────────┬────────┘
                  │
                  ▼                          S51
              ╱─────────╲
            ╱ SIGN OF GYRO ╲
          ╱ OUTPUT IS SAME AS ╲   NO
          ╲ SIGN OF PREVIOUS  ╱────────────────────┐
            ╲   OUTPUT?    ╱                        │
              ╲─────────╱                           │
                  │ YES                             │
                  ▼                                 ▼
    ┌──────────────────────┐ S52   ┌──────────────────────────┐ S53
    │   SIGN COUNTER +1    │       │   RESET SIGN COUNTER     │
    └──────────┬───────────┘       └────────────┬─────────────┘
               │                                │
               ▼◄───────────────────────────────┘
           ╱─────────╲              S54
         ╱    SIGN     ╲
       ╱   COUNTER IS    ╲   NO
       ╲ EQUAL TO OR MORE ╱──────────────────┐
         ╲  THAN "8" ?  ╱                     │
           ╲─────────╱                        │
               │ YES                          │
               ▼                              │
    ┌──────────────────────┐ S55              │
    │ CHANGE Th1 TO BE LOWER│                 │
    │       NUMBER          │                 │
    └──────────┬───────────┘                  │
               │                              │
               ▼◄─────────────────────────────┘
    ┌─────────────────┐
    │  SUBROUTINE FOR │
    │ CORRECTING Th1 IS│
    │    COMPLETED    │
    └─────────────────┘
```

# FIG. 22A

FLOWCHART OF IMAGE BLUR CORRECTION

```
        ┌─────────────────┐
        │   IMAGE BLUR    │
        │   CORRECTION    │
        │   IS STARTED    │
        └─────────────────┘
                │
                ▼
     ┌─────────────────────────┐  S61
     │  DETECT ANGULAR VELOCITY│
     │    FROM GYRO SENSOR     │
     └─────────────────────────┘
                │
                ▼
     ┌─────────────────────────┐  S62
     ││     SUBROUTINE         │
     ││   FOR CORRECTING Th1   │
     └─────────────────────────┘
                │
                ▼
              ╱ S63 ╲
           ╱  GYRO OUTPUT  ╲   NO
          ╱ IS LESS THAN Th1? ╲────┐
           ╲               ╱       │
              ╲         ╱          │
                │ YES              │
                ▼                  │
     ┌─────────────────────────┐  S64
     │ GYRO OUTPUT IS SET TO ZERO│  │
     └─────────────────────────┘   │
                │◄─────────────────┘
                ▼
     ┌─────────────────────────┐  S65
     │   CALCULATE MOVEMENT    │
     │        AMOUNT           │
     └─────────────────────────┘
                │
                ▼
     ┌─────────────────────────┐  S66
     │       DRIVE COILS       │
     └─────────────────────────┘
                │
                ▼
              ╱ S67 ╲
           ╱  EXPOSURE  ╲      NO
          ╱ IS COMPLETED? ╲───────┘
           ╲            ╱
              ╲      ╱
                │ YES
                ▼
        ┌─────────────────┐
        │   IMAGE BLUR    │
        │  CORRECTION IS  │
        │   COMPLETED     │
        └─────────────────┘
```

# FIG. 22B

```
┌─────────────────────┐
│   SUBROUTINE FOR     │
│  CORRECTING Th1 IS   │
│      STARTED         │
└─────────────────────┘
           │
           ▼
        ╱╲  S71
      ╱ ANGULAR ╲
    ╱ VELOCITY IS EQUAL ╲  NO
   ╱   TO OR MORE       ╲────────────────┐
    ╲   THAN Th2?      ╱                 │
      ╲             ╱                    │
        ╲╱                               │
         │ YES                           │
         ▼                               ▼
┌──────────────────┐ S72    ┌─────────────────────────┐ S73
│ SHAKE COUNTER +1 │        │   RESET SHAKE COUNTER   │
└──────────────────┘        └─────────────────────────┘
         │◄───────────────────────────────┘
         ▼
        ╱╲  S74
      ╱ SIGN OF ╲
    ╱ GYRO OUTPUT ╲  NO
   ╱ IS SAME AS SIGN OF ╲────────────────┐
    ╲    PREVIOUS      ╱                  │
      ╲  OUTPUT?     ╱                    │
        ╲╱                                │
         │ YES                            │
         ▼                                ▼
┌──────────────────┐ S75    ┌─────────────────────────┐ S76
│ SIGN COUNTER +1  │        │   RESET SIGN COUNTER    │
└──────────────────┘        └─────────────────────────┘
         │◄───────────────────────────────┘
         ▼
        ╱╲  S77
      ╱ SHAKE ╲
    ╱ COUNTER IS ╲  NO
   ╱ EQUAL TO OR MORE ╲──────────────────┐
    ╲   THAN "4" ?   ╱                    │
      ╲          ╱                        │
        ╲╱                                │
         │ YES                            │
         ▼                                │
        ╱╲  S78                           │
      ╱ SIGN ╲                            │
    ╱ COUNTER IS ╲  NO                    │
   ╱ EQUAL TO OR MORE ╲───────────────────┤
    ╲   THAN "8" ?   ╱                    │
      ╲          ╱                        │
        ╲╱                                │
         │ YES                            │
         ▼                                │
┌──────────────────────┐ S79             │
│ CHANGE Th1 TO BE LOWER│                │
│      NUMBER          │                 │
└──────────────────────┘                 │
         │◄───────────────────────────────┘
         ▼
┌─────────────────────┐
│   SUBROUTINE FOR     │
│  CORRECTING Th1 IS   │
│     COMPLETED        │
└─────────────────────┘
```

# FIG. 23A

FLOWCHART OF IMAGE BLUR CORRECTION

```
┌─────────────────┐
│   IMAGE BLUR    │
│   CORRECTION    │
│   IS STARTED    │
└─────────────────┘
         │
         ▼
┌─────────────────────────┐
│ DETECT ANGULAR VELOCITY │  S81
│    FROM GYRO SENSOR     │
└─────────────────────────┘
         │
         ▼
┌─────────────────────────┐
│      SUBROUTINE         │  S82
│   FOR CORRECTING Th1    │
└─────────────────────────┘
         │
         ▼
      ◇ GYRO OUTPUT              NO
     IS LESS THAN Th1? ─────────────┐
         │ YES           S83        │
         ▼                          │
┌─────────────────────────┐  S84    │
│ GYRO OUTPUT IS SET TO ZERO│       │
└─────────────────────────┘        │
         │◄─────────────────────────┘
         ▼
┌─────────────────────────┐  S85
│   CALCULATE MOVEMENT    │
│        AMOUNT           │
└─────────────────────────┘
         │
         ▼
┌─────────────────────────┐  S86
│       DRIVE COILS       │
└─────────────────────────┘
         │
         ▼
      ◇ EXPOSURE                 NO
     IS COMPLETED? ─────────────────┐
         │ YES           S87
         ▼
┌─────────────────┐
│   IMAGE BLUR    │
│  CORRECTION IS  │
│   COMPLETED     │
└─────────────────┘
```

# FIG. 23B

```
        ┌─────────────────┐
        │ SUBROUTINE FOR  │
        │ CORRECTING Th1 IS│
        │     STARTED     │
        └─────────────────┘
                 │
                 ▼
            ╱─────────╲  S91
          ╱  ANGULAR   ╲
        ╱ VELOCITY IS EQUAL╲────NO────────────────────┐
        ╲  TO OR MORE     ╱                            │
          ╲  THAN Th2? ╱                               │
            ╲─────────╱                                │
                 │YES                                  │
                 ▼                                     │
            ╱─────────╲  S92                           │
          ╱  SIGN OF   ╲                               │
        ╱ GYRO OUTPUT IS ╲───NO────────────┐          │
        ╲ SAME AS SIGN OF ╱                 │          │
          ╲  PREVIOUS   ╱                   │          │
            ╲ OUTPUT? ╱                     │          │
            ╲───────╱                       │          │
                 │YES                       ▼          ▼
      ┌────────────────────┐ S93      ┌────────────────────┐ S94
      │    COUNTER +1      │          │   RESET COUNTER    │
      └────────────────────┘          └────────────────────┘
                 │                            │
                 ▼◄───────────────────────────┘
            ╱─────────╲  S95
          ╱ SHAKE COUNTER╲
        ╱ IS EQUAL TO OR MORE ╲───NO──────────────┐
        ╲    THAN "3" ?   ╱                         │
            ╲───────────╱                           │
                 │YES                               │
                 ▼                                  │
      ┌────────────────────┐ S96                    │
      │ CHANGE Th1 TO BE LOWER│                      │
      │      NUMBER        │                         │
      └────────────────────┘                         │
                 │◄────────────────────────────────┘
                 ▼
        ┌─────────────────┐
        │ SUBROUTINE FOR  │
        │ CORRECTING Th1 IS│
        │    COMPLETED    │
        └─────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003189164 A
- JP 2001201778 A
- JP 3473105 B
- US 20050001906 A
- EP 1708019 A2